# EUROPEAN PATENT SPECIFICATION

(11) **EP 1 172 236 B1**
(45) Date of publication and mention of the grant of the patent: **10.05.2006**
(21) Application number: 01660122.1
(22) Date of filing: 26.06.2001
(51) Int. Cl.: B60C 23/04

(54) **System for detecting and communicating operational characteristics of tires telecommunicationally and a method therefor**
Einrichtung zur Detektion und Kommunikation von Betriebseigenschaften von Reifen und Verfahren dafür
Système pour la détection et la communication de données opérationelles de pneumatiques et méthode pour cela

(30) Priority: 26.06.2000 US 603996; 02.05.2001 US 846388; 18.06.2001 US 881758
(43) Date of publication of application: 16.01.2002
(60) Divisional application: 05104006.1
(73) Proprietor: Nokian Tyres PLC., 37100 Nokia (FI)
(72) Inventor: Laitsaari, Juha, 33420 Tampere (FI); Hakanen, Jukka, 33270 Tampere (FI)
(74) Representative: Brax, Matti Juhani

(56) References cited:
- EP-A- 0 995 619
- WO-A-93/08036
- WO-A-99/61265
- DE-A- 19 632 150
- GB-A- 2 344 232
- US-A- 5 442 553
- US-A- 5 825 283

## Description

### Field of the Invention

The present invention is directed to tires, and specifically to systems integrated to or otherwise in connection with tires, said systems able to transmit information regarding the characteristics of the tires to a mobile communications device being carried by a user.

### Background of the Invention

A vehicle such as for example an automobile usually has mounted thereto a set of tires. These tires are the only means by which the vehicle makes contact with the road. And when the vehicle is traveling at a high speed, it is imperative that the operational characteristics of the tires be maintained above a given standard so as to avoid accidents and potential injury to the driver and passengers, if any, of the vehicle.

GB-A-2344232 teaches a plurality of tires movably mounted to a vehicle, each of said tires having in working relation therewith a system adaptable to communicate with a mobile communication means, wherein each system measures at least one parameter relating to the condition of said tire. Said system further comprises transceiver means electrically or electromagnetically connected to said sensor means, said transceiver means being adaptable to remotely communicate with said mobile communications means carried by an operator of a vehicle. Said mobile communications means may be hand-held or mounted within a vehicle.

The prior art teaches the incorporation of sensors, either to the tire proper or in proximity thereof, for measuring an operational parameter of the tire. Once the parameter is measured, it is transmitted to a terminal at a remote location, such as for example a maintenance facility, or to a monitor fixedly mounted to the vehicle. Such prior art teachings are disclosed for example in U.S. patents 5,825,286, 5,731,754, 5,731,516, 5,585,554, 5,540,092, 5,741,966, 5,472,938 and 5,825,283.

In particular, the prior art teaches that particular types of interrogators and transmitters have to be designed for a remotely located facility in order for the remote facility to receive information from the tires of the vehicle. And in order to be able to provide information relating to the tires to the driver of the vehicle, a special apparatus has to be either incorporated to the vehicle during its manufacture, or retrofitted thereto after the vehicle has been placed into service. Needless to say, such apparatus specifically designed for receiving the information from the tires are bulky and expensive.

The prior art furthermore does not teach communication among the tires.

It is therefore an objective of the present invention to provide an economical way for a user to mobilely monitor the operational characteristics of the tires mounted to a vehicle.

It is another objective of the present invention to provide a method whereby an operator of a vehicle can query the conditions of the tires on his vehicle, when he is either driving the vehicle or is away from the vehicle.

It is yet another objective of the present invention to enable communication among the tires of the vehicle so that the overall operational characteristics of the tires of the vehicle can readily be conveyed to the operator by means of any one of the tires.

The invention relates to a combination according to claim 1. The invention further relates to a telecommunications network according to claim 14. The invention relates also to a method according to claim 26. The invention relates also to a system according to claim 39.

The dependent claims describe some preferred embodiments of the invention.

One system to which the invention relates has sensor means and transceiver means, and it is intended for detecting and communicating operational characteristics of a tire to mobile communication means. Such a system may alternatively be adaptable to be integrated with a tire, provided inside a tire for example by mounting or fixing it on the surface of a tire, or coupled to the rim to which a tire is mounted about. The system may be, for example, coupled to the rim with a belt or fixed to the surface of the rim. The system may further have either a generator and/or a conventional battery for providing energy to the transceiver means and possible processor means.

It is possible that a system having sensor means, transceiver means and possible processor means is one integrated component. Alternatively, it is possible that a separate sensor part having all or part of the sensor means is coupled to the tire, for example for measuring the movements or deformation of the tire, and the rest of the system is coupled to a rim. In this case, the separate sensor part may be connected to the rest of the system, for example, with wires (an example of electrical connection) or wirelessly (that is, electromagnetically) using, for example, a further radio link between the sensor part and the rest of the system. In the case of a wireless connection, the separate sensor part has at least a transmitter and the other part of the system has at least a receiver for enabling unidirectional radio link. Alternatively, both the sensor part and the other part of the system may have transceivers. This further radio link may employ any suitable radio frequency or protocol for transmitting information from the sensor part to the other part or between these parts of the system.

### Brief Description of the Figures

The above-mentioned objectives and advantages of the present invention will become apparent and the invention itself will best be understood by reference to the following description of an embodiment of the invention taken in conjunction with the accompanying drawings, wherein:
Fig. 1 is an illustration of the system to be integrated to each tire of a vehicle, and its remote connectivity to a mobile communicator;
Figs 2a-2c in combination form the flow diagram for illustrating the operation of the system of the instant invention as shown in Fig. 1; and
Fig. 3 is an illustration of another embodiment of the instant invention system where information is relayed to the user via his mobile communicator when the user is located out of the ordinary communications range of the tires of the vehicle.

### Detailed Description of the Present Invention

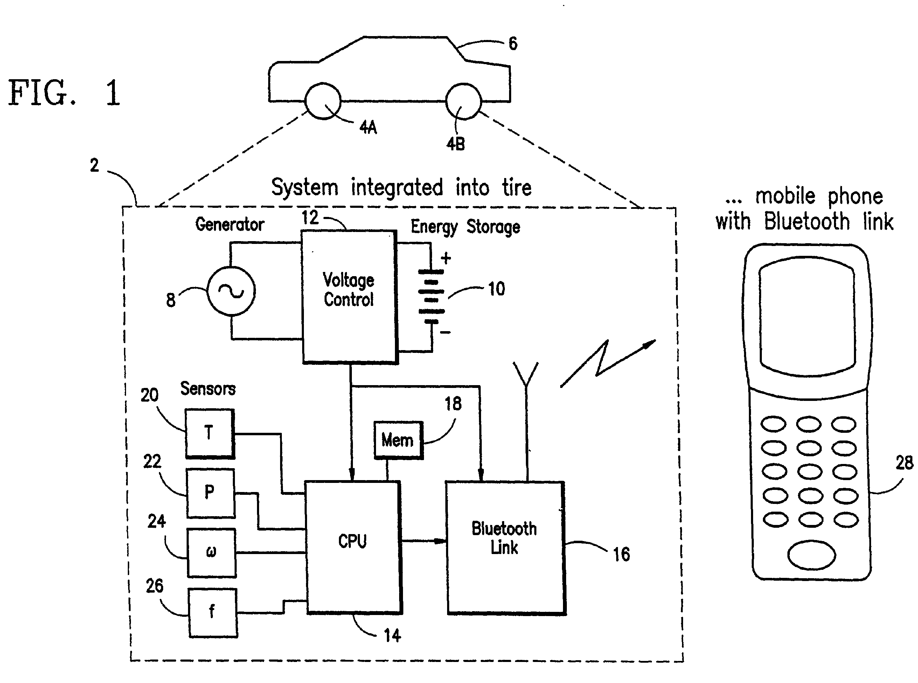

With reference to Fig. 1, the present invention includes a system 2 that is integrated to each of the plurality of tires 4a, 4b (and those tires not shown), mounted to a vehicle 6. System 2 could be integrated or incorporated to the interior wall of each of the tires 4 of vehicle 6 in a number of ways, among which are the methods in which integrated circuits are affixed to tires as disclosed for example in U.S. patents 5,483,827, 5,977,870 and 5,218,861.

For the instant invention, system 2 that may be integrated to each of the tires of the vehicle, such as for example an automobile, a truck, semi, etc., includes a generator 8 that converts the vibrations, or movement, of the tires into electrical energy. Such generator may be a means for converting energy, i.e., an energy conversion mechanism. Generator 8, in practice, could be a linear actuator such as for example the linear actuators manufactured by the Moving Magnet Technologies Company of Besancon, France, or a piezoelectric actuator such as the ACX Quick Pack actuator manufactured by the Active Control Experts Company of Cambridge, Massachusetts.

The electrical energy converted from generator 8 is fed to a conventional voltage control circuit 12, so that it may be provided to an energy store such as for example a rechargeable battery 10, a processor 14 and/or a telecommunications or transceiver module 16.Communications module 16 is a transceiver, or transponder, that operates under a telecommunications protocol. Processor 14 could be any kind of conventional microprocessors made by, for example, companies such as Intel or AMD. For the embodiment shown in Fig. 1, an Atmel Atmeca-103 8 bit micro controller may also be used.

A memory store 18 is electrically connected to processor 14. Data generated by processor 14 may be stored in memory store 18. Conversely, information stored in memory store 18 could be retrieved by processor 14 for further processing.

Also electrically connected to processor 14 are a number of sensors 20, 22, 24 and 26. These sensors are conventional sensors that are used to measure the temperature, pressure, rotational speed and frequency, respectively, of the tire. These sensors could be obtained from the Senso Nor Company of Horten, Norway or the VTI Hamlin Oy of Vantaa, Finland.

Although shown with four sensors, it should be appreciated that system 2 of the Fig. 1 embodiment could in fact have additional sensors such as for example sensors for measuring the acceleration and other parameters or characteristics of the tire. Other characteristics of the tire that may be measured include for example tire wear or tire friction. Moreover, in addition to the direct monitoring and measurement of the tire pressure, it is also possible to determine the pressure inside the tire from the information obtained from an accerometer. This may be done by correlating a certain pressure level to a certain frequency/amplitude of movement, or vibration, of the tire. Accordingly, sensors that measure the acceleration of the tire could also be integrated to the tire. Conversely, for the instant invention to operate, a minimum of at least one sensor, i.e., typically the pressure sensor or a sensor for measuring the pressure indirectly, is all that is required.

But for blow-outs or serious cuts, most tire failures are usually preceded by a gradual loss of inflation pressure. Thus, the parameter, or characteristics, of a tire that should be monitored closely is its pressure. But due to the heat generated from the rotational movement and vibration of the tire, to get an accurate reading of the tire pressure, the measured tire pressure should preferably be compensated by the temperature of the tire. Thus, both the air pressure and the temperature of the tire should preferably be monitored by, for example, sensors 22 and 20, respectively, in order to obtain a temperature corrected reading of the tire pressure.

Although the different parameters of the tires are typically monitored continuously by the respective sensors, to preserve energy, measurements of the parameters are taken periodically. These predetermined periodic measurements are fed to processor 14, which does the actual calculation to compensate the pressure parameter with the temperature parameter, or any other measured parameters.

In those instances where the of interest measured parameter passes a predetermined threshold, for example the measured tire pressure falling below a given pressure such as for example 1.5 bar or 20 psi, a warning signal is typically immediately output from processor 14 to communications module 16 for transmission to the user. More on that later.

Although unlikely, there is always the possibility that the pressure of the tire would exceed a given high pressure and thereby increases the likelihood that there would be a blow-out. Thus, for the instant invention system, such over inflation likewise would preferably trigger an immediate alarm if the pressure sensor 22 determines that the pressure in the tire approaches or passes an upper predetermined tire pressure limit.

Transceiver module 16 operates under a telecommunications protocol. Such protocol may be a conventional wireless data link protocol such as for example the Bluetooth communications protocol that allows relatively short distance (10 m to 100 m) data communications between communicative elements with a throughput up to 1Mbps. The link established by such Bluetooth protocol could be considered as a radio link that operates in the unlicenced 2.4GHz band. Further, under the Bluetooth protocol, such radio link employs a spread spectrum technique that allows the signal to frequency hop to thereby operate effectively even in noisy environments. Forward error correction (FEC) is also used in the Bluetooth protocol to improve the overall data transfer in the presence of noise. Module 16, operating under such Bluetooth protocol or other similar protocols, may be purchased from the Ericsson Company of Sweden or the Cambridge Silicon Radio Company of Cambridge, England. For the sake of simplicity, the external flash ROM memory that contains the Bluetooth software stack for operating communications module 16 is not shown in system 2.

Given that transceiver module 16 is capable of transceiving information within a given distance, mobile communicators or communication units such as for example pagers, personal digital assistance (PDA) devices, wireless terminals, and mobile phones all may be used for trancieving information with transceiver module 16. For the embodiment shown in Fig. 1, a mobile communicator such as for example a Nokia cellular browser capable phone that is WAP (wireless application protocol) compliant is used. Such mobile phone includes the Nokia models 6210, 6250, 9110i and 7110. Each of those Nokia phones may be used as a WAP browser that enables it to effectively communicate with communications module 16, which may act as a server when communicating with mobile phone 28. As noted above, even though a mobile phone is used for the embodiment of Fig. 1, other types of mobile communicators could likewise be used as the browser, so long as they are WAP adaptive. Of course, as technology advances, other types of wireless data link or speech combined with data link protocols or formats that are equivalents to, or replacements of, the WAP protocol are also envisioned and are adaptable for use for the instant invention.

Insofar as the Bluetooth communications protocol provides for two-way connection, mobile phone 28 in fact is communicatively connectable to any one of the tires 4 mounted to vehicle 6 at any time. Similarly, every tire mounted to vehicle 6 is in direct communication with every other tire so that the respective information from all of the tires of the vehicle are exchanged among the tires. The respective information from the various tires, when fed to a tire, is stored in memory store 18 of that tire. Accordingly, memory store 18 has stored therein information relating to all of the tires of the vehicle. Thus, any one of the tires mounted to the vehicle could in fact act as a server for collecting the operational parameters from the other tires, as well as itself, and transmit all of that information to the mobile communicator. Alternatively, each of the tires can transmit its own information individually to the mobile communicator, as each of the tires has its own communications module.

As phone 28 is mobile, the operator of the vehicle may in fact obtain information relating to the operational characteristics of the tires of the vehicle without being in the vehicle, by simply sending out a query to the tires for retrieving information being monitored thereat.

To conserve energy, when the vehicle is not moving and there is no request from the mobile communicator for information after a given time period, system 2 is put into a sleep or standby mode. But as was noted above, if a certain predetermined threshold is sensed at any of the tires of the vehicle, that tire would wake from its sleep mode and immediately transmit a warning message, which may include sound, vibrations, or other sensory attributes to the operator via mobile phone 28.

Since all of the tires of the vehicle communicate with each other, the respective positions of the tires, with respect to each other and the vehicle, are known. The tires together with the mobile communicator therefore in essence establish a mini telecommunications network or intranet that enables each tire to know exactly the status of the other tires, and to report the respective statuses of the tires to the operator via the mobile communicator carried by him.

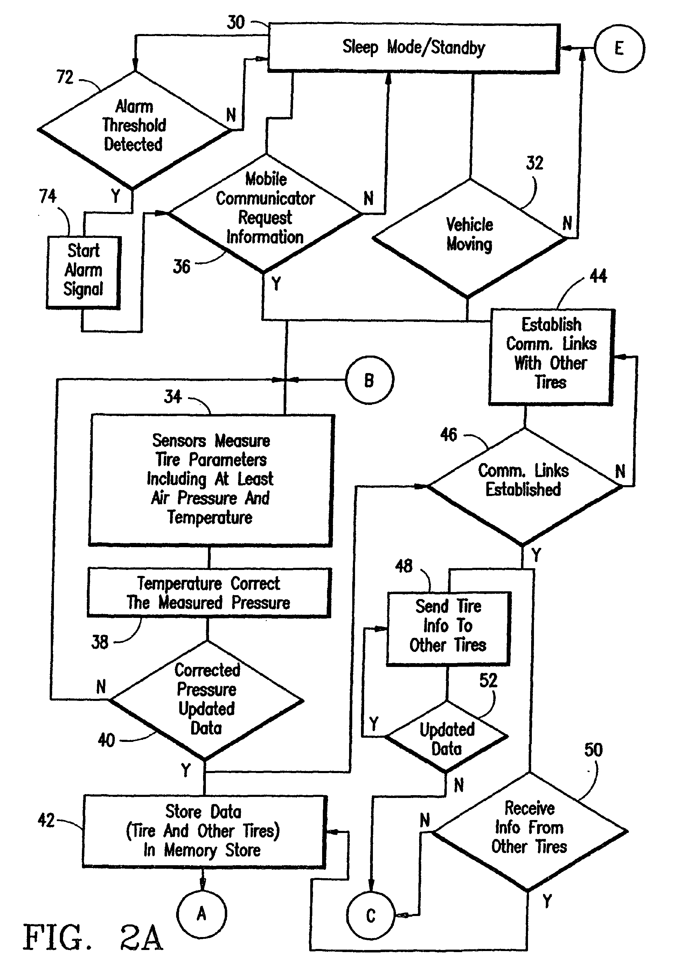

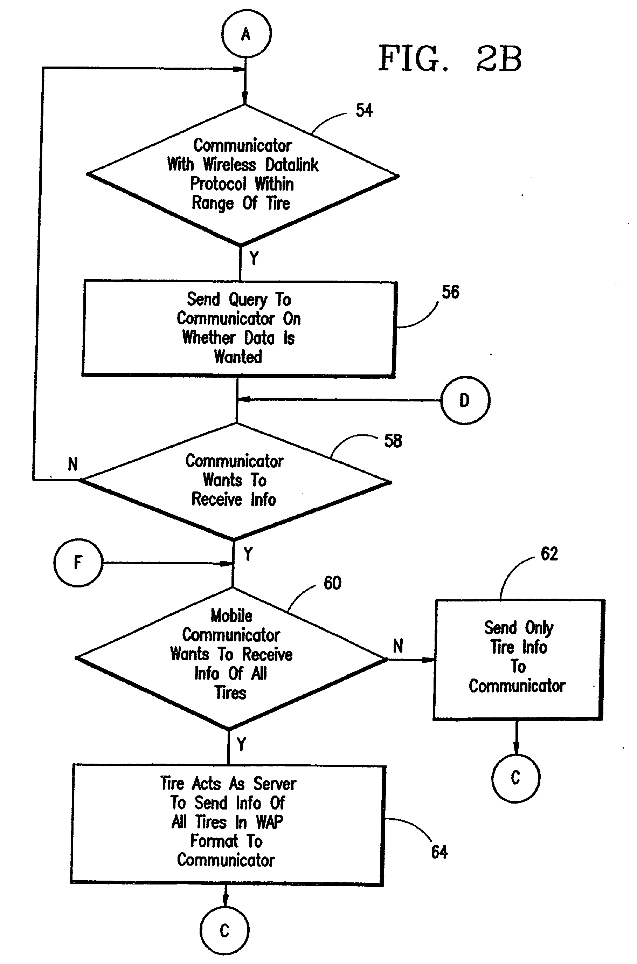

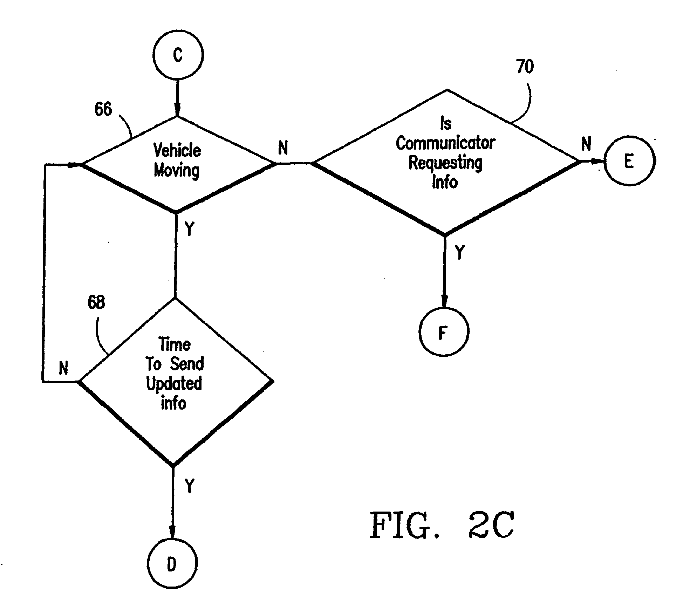

With reference to Fig. 2, the operation of the system of the instant invention, as it relates to one of the tires of the vehicle, is given as an example. The operation of the system of the instant invention is effected by the various components, either singly or in combination, as shown in Fig. 1.

Beginning at process step 30, the system is in a sleep mode, or has been put on standby. To initiate the system, a determination is made, by processor 14 from input by an appropriate sensor, on whether vehicle 6 is moving, per process step 32. If the vehicle is stationary, and therefore the tires are not rotating, the process returns to step 30. Once it is determined that the vehicle is moving, the process proceeds to step 34 so that sensors 20-26 of the system would begin to measure the various tire parameters of the tire. As was noted above, the two tire parameters that should be measured are the tire pressure and the temperature.

Process step 34 also begins when there is a specific request from the mobile communicator, such as mobile phone 28, that information be transmitted thereto, per step 36. In any event, once the parameters are measured by the sensors, the process proceeds to step 38 in which the measured tire pressure is compensated by the measured temperature. If additional parameters are measured, some of those parameters may also be compensated by the other measured parameters. The process then determines whether the corrected tire pressure is an updated tire pressure, per step 40. If other tire parameters are also being measured and compensated, then those corrected tire parameters are likewise determined per step 40 on whether or not they are updated tire parameters.

If it is determined that the tire pressure has not been updated, the process returns to step 34, so that the tire parameter can continuously be monitored and measured. However, if it is determined that the measured parameter is an updated parameter, then the updated parameter is stored as new data in memory store 18 of the system, per step 42.

Further with respect to Fig. 2a, after the process has determined that the vehicle is in fact moving, per step 32, or that the mobile communicator has sent a query requesting information, per step 36, the tire initiates an attempt to establish communications links with the other tires, per step 44. A determination is then made, per step 46, on whether or not the communications links are established. If they are not, the process returns to step 44 and waits until the communications links with the other tires of the vehicle are established.

Thereafter, the information, if any, that is stored in the memory store of the system of the tire being discussed with reference to Fig. 2 is transmitted to the other tires of the vehicle, per step 48. At the same time, if there is data that is being transmitted from the other tires of vehicle 6 to the tire being discussed, as determined in step 50, then those data from the other tires are routed to memory store 18 of the being discussed tire for storage. If no data is being received from the other tires, the process proceeds to step 66 (Fig. 2c) to determine whether the vehicle is still moving.

Similarly, once the being discussed tire has sent whatever information it has in its memory store to the other tires, it proceeds to step 52 to determine whether the data in its memory store relating to its own characteristics has been updated. If it has, then that updated data is transmitted to the other tires. If not, the process proceeds to step 66.

With reference to Fig. 2b, once the measured and compensated parameters relating to the being discussed tire and the data received from the other tires of the vehicle are stored in the former's memory store, the process proceeds to step 54, so that the system can made a determination on whether the mobile communicator is within a certain distance from the tire. As mentioned above, given that the Bluetooth protocol, or other telecommunication protocols similar thereto, allows for communications between various communicative devices from 10 meters to 100 meters, once mobile phone 28 comes within the range of communications module 16, a signal is received thereby that a communicative device such as for example mobile phone 28 is in range.

Once communications module 16 senses that a mobile phone is nearby, it sends out a query to the mobile phone to ask whether the latter wants to receive the data stored in the memory of the system, per step 56. Upon seeing the request displayed on the mobile phone, the user may activate the appropriate button on the phone to provide a response to system 2. If the user does not want any data from the tire, then the process of system 2 returns to step 54 to once again make a determination on whether a mobile communicator is within its range.

However, if a positive response is received from the mobile phone that it indeed wants to receive information from the being discussed tire, then the process next determines, per step 60, on whether the mobile phone wants to receive the information relating to all of the tires of vehicle 6. If it does, per step 64, the tire would act as a server for all of the tires of vehicle 6. The data of the respective tires would then be sent by the being discussed tire, if any of those data is updated data and had not been sent earlier, under a WAP format, to mobile phone 28, per step 64. On the other hand, if the request from the mobile phone is that it does not want to receive the information of all tires from the being discussed tire per step 60, then the being discussed tire would act as a server for itself so that only the tire information relating to it is transmitted to mobile phone 28, per step 62.

The reason that mobile phone 28 would request the information from only the being discussed tire is because mobile phone 28 is provisioned with the capability of either retrieving information individually from all of the tires of the vehicle, or retrieving information from a single tire acting as a server for all of the tires of the vehicle. This alternative adaptability of mobile phone 28 is desirable and could be used, for example, in those instances where there may be a malfunction in the communications system of any one, or more, of the tires of the vehicle. For example, if system 2 of tire 4b of vehicle 6 were to malfunction and it has been acting as a server for all of the tires of vehicle 6 in communication with mobile phone 28, then the communications link between tire 4b and mobile phone 28 could either be disconnected, or inaccurate data be exchanged between tire 4b and mobile phone 28. At which time, recognizing that the received data may not be accurate, the user may switch to the mode whereby mobile phone 28 retrieves data from each of the tires of vehicle 6 individually. And with the separate retrieval of information, the user could easily determine, from the retrieved data from the respective tires, that there is a malfunction at tire 4b.

After information is transmitted to mobile phone 28, the process of the instant invention system proceeds to step 66 (Fig. 2c) to make a determination on whether the vehicle is still running. If it is, a further determination is made, per step 68, on whether it is time to send updated information to mobile phone 28. If it is, the process proceeds to step 58 to again inquire mobile phone 28 as to whether it wants to receive the updated information from the being discussed tire.

If it is determined in step 66 that the vehicle is no longer moving, the process proceeds to step 70 to make a determination on whether mobile phone 28 is requesting information from the tire. If it is, the process returns to step 60 to query the mobile phone on whether it wants the information from all of the tires or whether it only wants the information from the being discussed tire. If mobile phone is not requesting information as determined in step 70, the process returns to step 30, as the system goes into the sleep mode.

Thus, the respective communication systems of the instant invention for each of the tires in combination effect a telecommunications network in which the system integrated to each tire monitors and measures, at minimum, at least one parameter, but most likely at least the pressure and temperature of the tire, whenever the tire is rolling. The thus measured tire pressure data is temperature corrected by processor 14 of the system and stored in memory store 18. The tire could then send the data relating to itself to the other tires mounted to the vehicle. Accordingly, each tire of the vehicle in turn has stored in its own memory store 18 the respective temperature corrected pressures of all of the tires of the vehicle.

And whenever a mobile communicator such as for example a mobile phone or a PDA comes within range of any one of the tires or the vehicle, each of the tires would ask the mobile phone whether it wants to receive the pressure information relating to itself, or to the other tires of the vehicle. If the answer is yes, each of the tires of the vehicle will act as a server for sending either the information relating only to itself, or the respective data relating to all of the tires of the vehicle, to the mobile phone in the appropriate wireless data link protocol. Putting it differently, for the telecommunications network of the instant invention, any one of the tires of the vehicle may act as the server, while the mobile communicator acts as the browser.

Finally, to conserve energy, if the car is not running and if the mobile phone is not requesting information from the tires, the respective systems of the tires of the vehicle would go into a sleep mode until either the tires once again begin to roll, or whenever the pressure in any one of the tires of the vehicle drops below an alarm threshold, such as for example 1.5 bar or exceeds a high alarm threshold, such as for example 45 psi, a pressure well above the acceptable operating pressure of the tire.

This continuous monitoring of the alarm thresholds is represented by processing step 72. See Fig. 2A. So long as there is no detection of any alarm condition, the process continues to monitor for any alarm thresholds. But as soon as an alarm threshold is detected, the process proceeds to step 74 and an alarm signal is sent to the mobile communicator. Thereafter, the process proceeds to step 36 to determine if the user at that point would want to request that information be provided to the communicator as discussed above. If there is no request received, the process would continue to monitor the alarm thresholds and output the alarm signal to the mobile communicator as long as the alarm condition persists, or at least for a predetermined period of time.

In those instances where the mobile communicator, for example mobile phone 28, as carried by the user, is sufficiently far away from the vehicle that the respective communicative systems of tires 4 could not communicate therewith, another embodiment of the instant invention is envisioned.

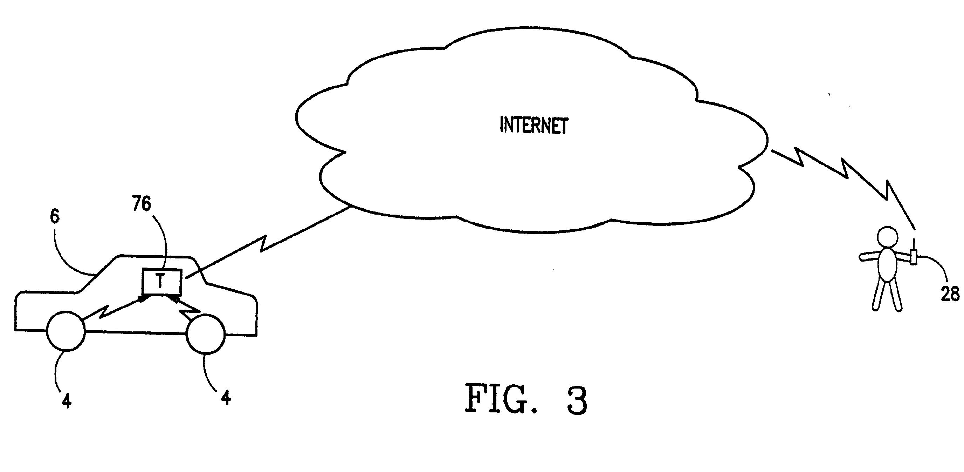

In particular, with reference to Fig. 3 which shows vehicle 6 being sufficiently far away from the user and his mobile communicator 28 so that the respective transceiver systems of tires 4 could not directly communicate therewith, to convey information regarding the operational characteristics of the tires to mobile communicator 28, a computerized communications system 76, mounted to vehicle 6, that has a long range wireless transceiver capable of telecommunicating with mobile communicator 28 via the internet, or other telecommunications or computer networks, is utilized. Using the same datalink protocol as discussed, supra, system 76 is also in direct communication with the transceiver systems of tires 4 of vehicle 6 so that it may transceive data therewith. To communicate with mobile communicator 28 by way of the internet, system 76 is adaptable to use the many available internet protocols and a wireless transceiver, such as for example a wireless modem. The long range signal transmitting aspect of system 76 is conventional and is disclosed, for example, in U.S. patents 5,825,286 and 5,473,938.

System 76 could be any communicator or communications system (with sufficient memory store) having transceiving capabilities that enables it to communicate with the transceiver systems of the tires and, at the same time, wirelessly connect to the internet. For example, system 76 may be a conventional laptop computer with wireless telecommunications capability, a web capable PDA or a web capable mobile phone that could be integrated to or retrofitted to vehicle 6. In fact, for those vehicles that have integrated or built in mobile communicators such as mobile phones, system 76 is not necessary as those "fixed' communicators could be configured to communicate with the transceivers of the respective tires, and transmit the operational parameters of the tires to the mobile communicator carried by the user via the internet, when the situation demands or when prompted by the user.

In operation, similar to the operational steps as outlined in Fig. 2, system 76 may periodically send data that it has collected from the various tires of vehicle 6 to mobile phone 28 by means of the internet, or may send information regarding the operational characteristics of the tires to the user when a request is received from mobile phone 28 for the operational characteristics of the tires. So, too, when any one of the tires of vehicle 6 senses that an alarm threshold has been reached or exceeded, an alarm signal is first sent to system 76, which in turn would immediately commence connection with mobile phone 28 via the internet, so as to inform the user of the potential problem by means of an alarm signal, per discussed above.

In essence, instead of sending the data directly from a tire to a mobile phone as was discussed above with respect to Figs. 1 and 2, the embodiment of Fig. 3 is capable of sending data first from any one of the tires, or all of the tires, to a computer system either mounted to, or resident in, the vehicle to which the tires are mounted. And the computer system mounted to the vehicle is equipped with the appropriate wireless modem or other transceiver means, so as to be able to log onto a telecommunications or computer network, such as for example the internet, and from there convey any information in regard to the tires to the user via the mobile communicator that the user is carrying. In the case where a mobile phone built into the vehicle is used, there is no need for any wireless modem or other transceiver means, as such mobile phones are web based communicators that are adaptable to connect directly to the internet. This alternative embodiment comes into play when the mobile communicator is out of the range of the transceiver systems of the respective tires of the vehicle.

The embodiments of the invention discussed so far are such embodiments, where tire systems are communicatively interconnected to each other, as well as individually to a mobile communicator. The communication of data between the tire systems and mobile communicator is, for example, by means of the Bluetooth protocol.

A further variant of the invention is the following. Transceivers are located at tire systems in tires for transmitting information to a mobile communicator. In such transmission of information, the tire systems located at tires may operate at a given communications protocol while the communications protocol used by mobile communicator may be different. A separate converter module may be used to convert the signals of one communications protocol (and/or frequency) into signals of another communications protocol (and/or frequency) so that communications between the tire systems and the mobile communicator could be had efficiently irrespective of the difference in the communications protocols (and/or frequency). Such a separate converter module is adaptable to communicate using two communications protocols and/or two frequencies. It may be a module mounted to the vehicle or a portable device, for example a portable communications device such as a Personal Digital Assistant. Such a portable device may be moved from one vehicle to another and utilized in different vehicles, so long as tires of those vehicles are equipped with tire systems that are communicable with the converter module.

## Claims

1. In combination, a vehicle (6) including a plurality of tires (4) movably mounted thereto, each of said tires having in working relation therewith a system (2) adaptable to communicate with a mobile communications means (28, 76), said system comprising:
sensor means (20, 22, 24, 26) for measuring at least one of the parameters that affect the performance of said each tire; and
transceiver means (16) electrically or electromagnetically connected to said sensor means for outputting and receiving data to and from said system;
**characterised in that** each of said systems of said tires mounted to said vehicle is adaptable to communicate with the systems of the other tires movably mounted to said vehicle and further adaptable to act as a server to communicate with said mobile communications means (28, 76).

2. Combination of claim 1, wherein each of said tires (4) has said system (2) integrated thereto; wherein in said system said transceiver means (16) and sensor means (20, 22, 24, 26) are electrically interconnected; and wherein each of said tires is adaptable to communicate with the other tires.

3. Combination of claim 1, where each of said tires (4) has said system (2), which is adaptable to be integrated with said tire, provided inside the tire, or coupled to the rim to which said tire is mounted about.

4. Combination of claim 2, wherein said system (2) further comprising:
processor means (14) electrically connected to said sensor means (20, 22, 24, 26) and said transceiver means (16), said processor means using the parameters received from said sensor means to generate data relating to the condition of said each tire, said processor means transmitting a query to said mobile communications means (28, 76) via said transceiver means asking whether said mobile communications means wants to receive the data.

5. Combination of claim 1 or 3, wherein said system (2) further comprising:
processor means (14) using the parameters received from said sensor means (20, 22, 24, 26) to generate data relating to the condition of said each tire and transmitting a query to said mobile communications means (28, 76) via said transceiver means (16) asking whether said mobile communications means wants to receive the data.

6. Combination of any one of claims 1 to 3, wherein the sensor means(20, 22, 24, 26) in each of said systems (2) comprises at least one pressure sensor (22) for measuring the air pressure of said each tire and at least one temperature sensor (20) for measuring the temperature of said each tire, a temperature corrected air pressure of said each tire being obtained by compensating the measured air pressure with the measured temperature.

7. Combination of any one of claims 1 to 3, wherein said mobile communications means (28, 76) comprises a WAP (Wireless Application Protocol) based mobile phone (28); and
wherein the system (2) that acts as the server transmits a query to said mobile phone acting as a browser to ask said mobile phone whether it wants to receive data representative of the respective conditions of said tires when said mobile phone is within a given distance from said vehicle.

8. Combination of any one of claims 1 to 3, wherein said mobile communications means (28, 76) comprises a WAP (Wireless Application Protocol) mobile phone (28); and
wherein said systems (2) of said tires mounted to said vehicle each exchange data with said mobile phone so that data representative of the condition of each of said tires is separately transmitted to said mobile phone.

9. Combination of any one of claims 1 to 3, wherein said systems (2) of said tires of said vehicle each exchange data relating to the condition of its own tire with the systems of the other tires; and
wherein the system (2) of each of said tires of said vehicle further comprises at least one memory (18) for storing the exchanged data from the other systems as well as the data relating to the condition of its own tire so that when said each system acts as the server, the data relating to the respective conditions of all of the tires of said vehicle is transmitted by said each system to said mobile communications means (28, 76).

10. Combination of any one of claims 1 to 3, wherein said system (2) goes into a sleep mode if said vehicle is not in operation and said mobile communications means (28, 76) is not requesting data from said systems.

11. Combination of any one of claims 1 to 3, wherein said mobile communications means (28, 76) comprises a mobile phone and said transceiver means (16) comprises a communications module; and
wherein the respective systems (2) of said tires and said mobile phone (28) all operate under the Bluetooth wireless datalink protocol.

12. Combination of claim 4, further comprising:
an energy store (10) for supplying electrical energy to said transceiver means (16) and said processor means (14); and
an energy conversion means (8, 12) electrically connected to said energy store (10), said energy conversion means converting the movement of said tire into electrical energy, the converted electrical energy being routed to said energy store for storage.

13. Combination of claim 7, wherein said server system (2) and said mobile phone (28) communicate periodically with each other, said server system sending updated data relating to the respective conditions of said tires to said mobile phone every predetermined time period, said server system immediately transmitting a warning signal to said mobile phone if a selected one of the being measured parameters of said tires reaches or passes a given threshold; and
wherein said server system (2) and said mobile phone (28) continue to communicate with each other and updated data continues to be transmitted to said mobile phone from said server system until said vehicle is not moving and said mobile phone is no longer requesting that updated data be transmitted thereto.

14. A telecommunications network, comprising:
a plurality of tires (4) each movably mounted to a vehicle (6), each of said tires having in working relation therewith a tire system (2) having electrically or electromagnetically interconnected sensor means (20, 22, 24, 26), transceiver means (16) and processor means (14), said tire systems able to wirelessly communicate among each other, the sensor means in each of said tire systems measuring at least one parameter of said each tire that reflects the condition of said each tire; and
a remote communicator (28, 76) adaptable to be in communication with each of said tire systems (2);
wherein said tire systems (2) and said communicator (28, 76) all operate under a wireless datalink protocol so that said communicator can exchange information with either all of said tire systems or with only selected ones of said tire systems for receiving data indicative of the respective conditions of said tires.

15. Network of claim 14, wherein each of said tires has said electrically interconnected sensor means (20, 22, 24, 26), transceiver means (16) and processor means (14) integrated thereto; and wherein said tires and said communicator (28, 76) all operate under said wireless datalink protocol.

16. Network of claim 14 or 15, wherein said communicator (28, 76) and only one selected tire system (2) or tire are arranged to exchange information.

17. Network of claim 16, wherein said communicator (28, 76) comprises a mobile phone
and wherein the respective transceiver means (16) of said tire systems each comprise a communications module, said mobile phone (28, 76) and said respective communications modules operating under a wireless datalink protocol; and
wherein a selected one of said tire systems (2) acts as a server and said mobile phone (28, 76) acts as a browser for said network, data measured by the sensor means (20, 22, 24, 26) of said respective tires relating to the conditions of said respective tires being sent from said server tire system to said mobile phone.

18. Network of any one of claims 14 to 16, wherein the sensor means (20, 22, 24, 26) in each of said tire systems (2) comprises at least one pressure sensor (22) for measuring the air pressure of said each tire and at least one temperature sensor (20) for measuring the temperature of said each tire, a temperature corrected air pressure of said each tire being obtained by compensating the measured air pressure with the measured temperature.

19. Network of claim 14 or 15, wherein said communicator (28, 76) comprises a mobile phone and wherein said tire systems (2) of said tires mounted to said vehicle each independently exchange data with said mobile phone so that data representative of the condition of each of said tires is separately transmitted to said mobile phone.

20. Network of any one of claims 14 to 16, wherein the processor means (14) of said each tire system (2) is arranged to use the parameter measured by its corresponding sensor means (20, 22, 24, 26) to generate data relating to the condition of said each tire and the processor means of said each tire system is adaptable for transmitting a query to said communicator (28, 76) via its corresponding transceiver means asking whether said communicator wants to receive the data generated thereby.

21. Network of any one of claims 14 to 16, wherein said tire systems (2) of said tires of said vehicle each exchange data relating the condition of its own tire with the other tire systems; and
wherein each of said tire systems (2) of said vehicle further has at least one memory (18) for storing the data received from the other tire systems relating to the respective conditions of those tires as well as data relating to the condition of its own tire so that when said each tire system is selected to exchange information with said communicator (28, 76), the data relating to the respective conditions of all of the tires of said vehicle is transmitted by said each tire system to said communicator.

22. Network of claim 21, wherein each of said tires (4) has integrated thereto said at least one memory (18).

23. Network of any one of claims 14 to 16, wherein when said vehicle (6) is not moving and said communicator (28, 76) is not requesting data from said tire systems (2), no data is sent from any of said tire systems to said communicator, said tire systems resume transmitting data to said communicator when said tires begin to move, when a status request is received from said communicator or when the air pressure in any one of said tires is sensed to be below a predetermined pressure.

24. Network of any one of claims 14 to 16, wherein each of said tire systems (2) of said tires of said vehicle further comprises:
an energy store (10) for supplying electrical energy to the transceiver means (16) and processor means (14) in said each tire system; and
an energy conversion means (8, 12) electrically connected to said energy store (10), said energy conversion means converting the movement of said each tire into electrical energy, the converted electrical energy being routed to said energy store for storage.

25. Network of claim 24, said energy store (10) being integrated to each of said tires (4).

26. A method of conveying the respective conditions of tires movably mounted to a vehicle to an operator, comprising the step of:
providing to each of said tires a tire system (2) having electrically or electromagnetically interconnected sensor means (20, 22, 24, 26), transceiver means (16) and processor means 14), the sensor means in each of said tires measuring at least one parameter of said each tire that reflects the condition of said each tire;
providing mobile communications means (28, 76) adaptable to be in communication with each of said tire systems (2); and
operating said tire systems and said mobile communications means under a wireless datalink protocol so that said mobile communications means can establish a data link (44, 46) with any one of said tire systems for receiving therefrom data indicative of at least the condition of said any one tire,
**characterised in that** the method comprises the step of:
configuring said tire systems to be able to wirelessly communicate among each other.

27. Method of claim 26, wherein said sensor means, transceiver means and processor means are electrically interconnected and integrated to each of said tires and wherein said tires and said mobile communications means are operated under a wireless data link protocol (54).

28. Method of claim 26 or 27, wherein said mobile communications (28, 76) means comprises a mobile communicator provided to said operator.

29. Method of claim 26, further comprising the step of:
said any one tire system transmitting a query to said communicator (56) via its corresponding transceiver means asking whether said communicator wants to receive the data generated by its processor means.

30. Method of claim 26, wherein said communicator comprises a mobile phone and wherein the respective transceiver means of said tire systems each comprise a communications module, said method further comprising the steps of:
exchanging data of said tires among said tire systems (48);
designating a selected one of said tire systems to act as a server and said mobile phone to act as a browser; and
sending data measured by the sensor means of said respective tires relating to the conditions of said respective tires from said server tire system via its communications module to said mobile phone (64).

31. Method of any one of claims 26 to 28, wherein said communicator comprises a mobile phone, and wherein said method further comprises the step of:
effecting said tire systems of said tires mounted to said vehicle to individually communicate with said mobile phone so that each of said tire systems independently exchanges data with said mobile phone and to separately transmit to said mobile phone data representative of the condition of said each tire.

32. Method of any one of claims 26 to 28, wherein the sensor means in each of said tire systems comprises at least one pressure sensor for measuring the air pressure of said each tire and at least one temperature sensor for measuring the temperature of said each tire, wherein said method further comprises the step of:
calculating a temperature corrected air pressure of said each tire by compensating the measured air pressure with the measured temperature (38).

33. Method of any one of claims 26 to 28, wherein said tire systems of said tires of said vehicle each exchange data relating the condition of its own tire with the other tire systems, further comprising the steps of:
providing to each of said tire systems of said tires of said vehicle at least one memory for storing the data received from the other tire systems relating to the respective conditions of those tires as well as data relating to the condition of its own tire (50, 42); and
transmitting the data relating to the respective conditions of all of the tires of said vehicle to said communicator from any one of said tire systems when said any one tire system is selected to exchange information with said communicator (64).

34. Method of claim 33, wherein said at least one memory (18) is integrated to each of said tires.

35. Method of any one of claims 26 to 28, further comprising the steps of:
stopping transmission of data from said tire systems to said communicator when said vehicle is not moving (66) and said communicator is not requesting data from said tire systems (70); and
resuming transmission of data to said communicator when said tires begin to move (68), when a status request is received from said communicator or when the air pressure in any one of said tires is sensed to be below a predetermined pressure.

36. Method of any one of claims 26 to 28, further comprising the steps of:
providing an energy conversion means to each of said tire systems of said tires of said vehicle for converting the movement of said each tire into electrical energy;
providing to each of said tire systems an energy store for supplying electrical energy to the transceiver means and processor means in said each tire system;
electrically connecting an energy conversion means to said energy store; and
routing the converted electrical energy to said energy store for storage.

37. Method of claim 36, wherein said energy conversion means and energy store are integrated to each of said tires.

38. Method of any one of claims 26 to 28, wherein said communicator comprises a mobile phone, said method further comprising the steps of:
designating one of said tire systems as a server tire system;
effecting periodic communication between said server tire system and said mobile phone, other, said server tire system sending updated data relating to the respective conditions of said tires to said mobile phone every predetermined time period (48, 52);
immediately transmitting a warning signal from said server tire system to said mobile phone if a selected one of the being measured parameters of said tires passes a given threshold (72); and
maintaining the communications link between said server tire system and said mobile phone until said vehicle is not moving (32) and said mobile phone is no longer requesting updated data be transmitted thereto (36).

39. A system, comprising:
a plurality of tires (4) each movably mounted to a vehicle (6), each of said tires having in working relation therewith a tire system (2) having electrically or electromagnetically interconnected sensor means (20, 22, 24, 26), transceiver means (16) and processor means (14), said tire systems able to wirelessly communicate among each other, the sensor means in each of said tire systems measuring at least one parameter of said each tire that reflects the condition of said each tire;
a remote communicator (28) adaptable to be in communication with each of said tire systems (2), said remote communicator having a limited communication range with said tire systems; and
an other communicator (76) in said vehicle adaptable to communicate with said tire systems (2) and telecommunicate with said remote communicator (28) by establishing a communications path therewith via a telecommunications network;
wherein said tire systems (2) and said remote communicator (28) can exchange information with either all of said tire systems or with only selected ones of said tire systems for receiving data indicative of the respective conditions of said tire systems while said remote communicator is within said communication range of said tire systems;
wherein said tire systems (2) further exchange data indicative of the respective conditions of said tires with said other communicator (76); and
wherein, when said remote communicator (28) is not able to communicate directly with said tire systems (2), said other communicator (76) establishes said communications path with said communicator (28) via said telecommunications network for routing the data indicative of the respective conditions of said tire systems to said remote communicator.

40. System of claim 39, wherein each of said tires (4) has said electrically interconnected sensor means (20, 22, 24, 26), transceiver means (16) and processor means (14) integrated thereto and wherein the tires and said remote communicator (28) can exchange information.

41. System of claim 39 or 40, wherein said remote communicator (28) and one selected tire system (2) or tire are arranged to exchange information.

42. System of claim 41, wherein said remote communicator (28) comprises a mobile phone and wherein the respective transceiver means (16) of said tire systems each comprise communications module, said mobile phone and said respective communications modules operating under a wireless datalink protocol; and
wherein a selected one of said tire systems (2) acts as a server and said mobile phone (28) acts as a browser for exchanging data between said tire systems and either said mobile phone or said other communicator (76) in said vehicle, data measured by the sensor means (20, 22, 24, 26) of said respective tires relating to the conditions of said respective tires being sent from said server tire system either directly to said mobile phone or routed to said mobile phone by way of said other communicator in said vehicle.

43. System of any one of claims 39 to 41, wherein said remote communicator (28) comprises one mobile phone and said other communicator (76) comprises an other mobile phone resident in said vehicle communicatively connectable to said telecommunications network; and
wherein said tire systems (2) of said tires mounted to said vehicle either collectively or each independently exchange data with said other mobile phone (76) if said one mobile phone (28) is unable to directly communicate with said tire systems so that data representative of the condition of each of said tires is routed to said one mobile phone by said other mobile phone via said telecommunications network.

44. System of claim 39 or 40, wherein the sensor means (20, 22, 24, 26) in each of said tire systems comprises at least one pressure sensor (22) for measuring the air pressure of said each tire and at least one temperature sensor (20) for measuring the temperature of said each tire, a temperature corrected air pressure of said each tire being obtained by compensating the measured air pressure with the measured temperature.

45. A method of any one of claims 26 to 38, wherein said mobile communications means (28, 76) further comprises an other communicator (76), the method comprising the steps of:
providing said other communicator (76) in said vehicle, said other communicator adaptable to be in communication with a telecommunications network;
establishing one communications path between said other communicator (76) and said telecommunications network and an other communications path between said mobile communicator (28) and said telecommunications network if said mobile communicator cannot establish a direct datalink with any of said tire systems (2); and
routing data indicative of the respective conditions of said tires received by said other communicator (76) to said mobile communicator (28) using said one and other telecommunications paths.

46. Method of claim 45, wherein said other communicator (76) comprises one of the following: a web capable mobile phone, a web capable personal digital assistance (PDA) device and a laptop computer with wireless telecommunications capability.

## Patentansprüche

1. In Kombination, ein Fahrzeug (6) mit einer Vielzahl von Reifen (4), die an diesem beweglich montiert sind, wobei jeder der Reifen in einer Arbeitsbeziehung damit ein System (2) aufweist, das geeignet ist, um mit einem mobilen Kommunikationsmittel (28, 76) zu kommunizieren, wobei das System umfasst:
ein Sensormittel (20, 22, 24, 26), um mindestens einen der Parameter, die das Leistungsvermögen des Reifens beeinflussen, zu messen; und
ein Transceivermittel (16), das elektrisch oder elektromagnetisch mit dem Sensormittel verbunden ist, um Daten an das System auszugeben und von dem System zu empfangen;
**dadurch gekennzeichnet, dass** jedes der Systeme der Reifen, die an dem Fahrzeug montiert sind, geeignet ist, um mit den Systemen der anderen Reifen, die an dem Fahrzeug beweglich montiert sind, zu kommunizieren, und darüber hinaus geeignet ist, um als Server zu wirken und somit mit dem mobilen Kommunikationsmittel (28, 76) zu kommunizieren.

2. Kombination nach Anspruch 1, wobei das System (2) in jedem der Reifen (4) integriert ist; wobei in dem System das Transceivermittel (16) und das Sensormittel (20, 22, 24, 26) elektrisch miteinander verbunden sind; und wobei jeder der Reifen geeignet ist, um mit den anderen Reifen zu kommunizieren.

3. Kombination nach Anspruch 1, wobei jeder der Reifen (4) das System (2) aufweist, welches geeignet ist, um mit dem Reifen integriert zu werden, im Inneren des Reifens vorgesehen ist, oder mit der Felge, um die herum der Reifen montiert wird, gekoppelt ist.

4. Kombination nach Anspruch 2, wobei das System (2) darüber hinaus umfasst:
ein Prozessormittel (14), das mit dem Sensormittel (20, 22, 24, 26) und dem Transceivermittel (16) elektrisch verbunden ist, wobei das Prozessormittel die von dem Sensormittel empfangenen Parameter verwendet, um Daten zu erzeugen, die mit dem Zustand jedes Reifens in Beziehung stehen, wobei das Prozessormittel eine Anfrage an das mobile Kommunikationsmittel (28, 76) über das Transceivermittel überträgt, wobei es fragt, ob das mobile Kommunikationsmittel die Daten empfangen möchte.

5. Kombination nach Anspruch 1 oder 3, wobei das System (2) darüber hinaus umfasst:
ein Prozessormittel (14), das die von dem Sensormittel (20, 22, 24, 26) empfangenen Parameter verwendet, um Daten zu erzeugen, die mit dem Zustand jedes Reifens in Beziehung stehen, und das eine Anfrage an das mobile Kommunikationsmittel (28,76) über das Transceivermittel (16) überträgt, wobei es fragt, ob das mobile Kommunikationsmittel die Daten empfangen möchte.

6. Kombination nach einem der Ansprüche 1 bis 3, wobei das Sensormittel (20, 22, 24, 26) in jedem der Systeme (2) mindestens einen Drucksensor (22) zum Messen des Luftdrucks von jedem Reifen und mindestens einen Temperatursensor (20) zum Messen der Temperatur jedes Reifens umfasst, wobei ein in Bezug auf die Temperatur korrigierter Luftdruck jedes Reifens erhalten wird, indem der gemessene Luftdruck mit der gemessenen Temperatur kompensiert wird.

7. Kombination nach einem der Ansprüche 1 bis 3, wobei das mobile Kommunikationsmittel (28, 76) ein Mobiltelefon (28) auf der Basis des WAP (Wireless Application Protocol) umfasst; und
wobei das System (2), das als der Server wirkt, einen Anfrage an das Mobiltelefon, das als ein Browser wirkt, überträgt, um das Mobiltelefon zu fragen, ob es Daten, die die jeweiligen Zustände der Reifen darstellen, empfangen möchte, wenn sich das Mobiltelefon in einem gegebenen Abstand von dem Fahrzeug befindet.

8. Kombination nach einem der Ansprüche 1 bis 3, wobei das mobile Kommunikationsmittel (28, 76) ein Mobiltelefon (28) auf der Basis des WAP (Wireless Application Protocol) umfasst; und
wobei die Systeme (2) der Reifen, die an dem Fahrzeug montiert sind, jeweils Daten mit dem Mobiltelefon austauschen, so dass Daten, die den Zustand von jedem der Reifen darstellen, separat an das Mobiltelefon übertragen werden.

9. Kombination nach einem der Ansprüche 1 bis 3, wobei ein jedes der Systeme (2) der Reifen des Fahrzeugs Daten, die mit dem Zustand seines eigenen Reifens in Beziehung stehen, mit Systemen der anderen Reifen austauscht; und
wobei das System (2) von jedem der Reifen des Fahrzeugs darüber hinaus mindestens einen Speicher (18) umfasst, um die ausgetauschten Daten von den anderen Systemen sowie die Daten, die mit dem Zustand seines eigenen Reifens in Beziehung stehen, zu speichern, so dass, wenn das jeweilige System als der Server wirkt, die Daten, die mit den jeweiligen Zuständen aller Reifen des Fahrzeugs in Beziehung stehen, von dem jeweiligen System an das mobile Kommunikationsmittel (28, 76) übertragen werden.

10. Kombination nach einem der Ansprüche 1 bis 3, wobei das System (2) in einen Ruhemodus übergeht, wenn das Fahrzeug nicht in Betrieb ist und das mobile Kommunikationsmittel (28, 76) keine Daten von den Systemen anfordert.

11. Kombination nach einem der Ansprüche 1 bis 3, wobei das mobile Kommunikationsmittel (28, 76) ein Mobiltelefon umfasst und das Transceivermittel (16) ein Kommunikationsmodul umfasst; und
wobei die jeweiligen Systeme (2) der Reifen und das Mobiltelefon (28) alle gemäß dem drahtlosen Datenübertragungsprotokoll Bluetooth arbeiten.

12. Kombination nach Anspruch 4, darüber hinaus umfassend:
einen Energiespeicher (10), um dem Transceivermittel (16) und dem Prozessormittel (14) elektrische Energie zuzuführen; und
ein Energieumwandlungsmittel (8, 12), das mit dem Energiespeicher (10) elektrisch verbunden ist, wobei das Energieumwandlungsmittel die Bewegung des Reifens in elektrische Energie umwandelt, wobei die umgewandelte elektrische Energie dem Energiespeicher zur Speicherung zugeführt wird.

13. Kombination nach Anspruch 7, wobei das Serversystem (2) und das Mobiltelefon (28) periodisch miteinander kommunizieren, wobei das Serversystem in jeder vorbestimmten Zeitperiode aktualisierte Daten, die mit den jeweiligen Zuständen der Reifen in Beziehung stehen, an das Mobiltelefon sendet, wobei das Serversystem sofort ein Warnsignal an das Mobiltelefon überträgt, wenn ein ausgewählter Parameter der gemessenen Parameter der Reifen einen gegebenen Schwellenwert erreicht oder überschreitet; und
wobei das Serversystem (2) und das Mobiltelefon (28) fortfahren, miteinander zu kommunizieren und aktualisierte Daten weiterhin zu dem Mobiltelefon von dem Serversystem übertragen werden, bis das Fahrzeug sich nicht bewegt und das Mobiltelefon nicht länger anfordert, an dieses aktualisierte Daten zu übertragen.

14. Telekommunikationsnetz, umfassend:
eine Vielzahl von Reifen (4), die jeweils beweglich an einem Fahrzeug (6) montiert sind, wobei jeder der Reifen in einer Arbeitsbeziehung damit ein Reifensystem (2) aufweist, das elektrisch oder elektromagnetisch verbundene Sensormittel (20, 22, 24, 26), Transceivermittel (16) und Prozessormittel (14) aufweist, wobei die Reifensysteme in der Lage sind, untereinander drahtlos zu kommunizieren,
wobei das Sensormittel in jedem der Reifensysteme mindestens einen Parameter jedes Reifens, der den Zustand jedes Reifens widerspiegelt, misst; und
eine Fernkommunikationseinrichtung (28, 76), die geeignet ist, so dass sie mit jedem der Reifensysteme (2) in Kommunikation steht;
wobei die Reifensysteme (2) und die Kommunikationseinrichtung (28, 76) alle gemäß einem drahtlosen Datenübertragungsprotokoll arbeiten, so dass die Kommunikationseinrichtung Informationen entweder mit allen Reifensystemen oder mit lediglich ausgewählten Reifensystemen austauschen kann, um Daten, die die jeweiligen Zustände der Reifen angeben, zu empfangen.

15. Netz nach Anspruch 14, wobei in jedem der Reifen die elektrisch verbundenen Sensormittel (20, 22, 24, 26), Transceivermittel (16) und Prozessormittel (14) integriert sind; und wobei die Reifen und die Kommunikationseinrichtung (28, 76) alle gemäß dem drahtlosen Datenübertragungsprotokoll arbeiten.

16. Netz nach Anspruch 14 oder 15, wobei die Kommunikationseinrichtung (28, 76) und nur ein ausgewähltes Reifensystem (2) oder ein ausgewählter Reifen eingerichtet sind, um Informationen auszutauschen.

17. Netz nach Anspruch 16, wobei die Kommunikationseinrichtung (28, 76) ein Mobiltelefon umfasst,
und wobei das jeweilige Transceivermittel (16) der Reifensysteme jeweils ein Kommunikationsmodul umfasst, wobei das Mobiltelefon (28, 76) und die jeweiligen Kommunikationsmodule gemäß einem drahtlosen Datenübertragungsprotokoll arbeiten; und
wobei ein ausgewähltes System der Reifensysteme (2) als ein Server wirkt, und das Mobiltelefon (28, 76) als ein Browser für das Netz wirkt, wobei von dem Sensormittel (20, 22, 24, 26) der jeweiligen Reifen gemessene Daten, die mit den Zuständen der jeweiligen Reifen in Beziehung stehen, von dem Server-Reifensystem an das Mobiltelefon gesendet werden.

18. Netz nach einem der Ansprüche 14 bis 16, wobei das Sensormittel (20, 22, 24, 26) in jedem der Reifensysteme (2) mindestens einen Drucksensor (22), um den Luftdruck jedes Reifens zu messen, und mindestens einen Temperatursensor (20), um die Temperatur jedes Reifens zu messen, umfasst, wobei ein in Bezug auf die Temperatur korrigierter Luftdruck jedes Reifens erhalten wird, indem der gemessene Luftdruck mit der gemessenen Temperatur kompensiert wird.

19. Netz nach Anspruch 14 oder 15, wobei die Kommunikationseinrichtung (28, 26) ein Mobiltelefon umfasst, und wobei die Reifensysteme (2) der Reifen, die an dem Fahrzeug montiert sind, jeweils unabhängig Daten mit dem Mobiltelefon austauschen, so dass Daten, die den Zustand von jedem der Reifen darstellen, separat an das Mobiltelefon übertragen werden.

20. Netz nach einem der Ansprüche 14 bis 16, wobei das Prozessormittel (14) von jedem Reifensystem (2) eingerichtet ist, um den Parameter, der von seinem entsprechenden Sensormittel (20, 22, 24, 26) gemessen wird, zu verwenden, um Daten, die mit dem Zustand jedes Reifens in Beziehung stehen, zu erzeugen, und das Prozessormittel jedes Reifensystems geeignet ist, um eine Anfrage an die Kommunikationseinrichtung (28, 76) über sein entsprechendes Transceivermittel zu übertragen, wobei gefragt wird, ob die Kommunikationseinrichtung die dadurch erzeugten Daten empfangen möchte.

21. Netz nach einem der Ansprüche 14 bis 16, wobei die Reifensysteme (2) der Reifen des Fahrzeugs jeweils Daten, die mit dem Zustand seines eigenen Reifens in Beziehung stehen, mit anderen Reifensystemen austauschen; und
wobei jedes der Reifensysteme (2) des Fahrzeugs darüber hinaus mindestens einen Speicher (18) aufweist, um die Daten, die von den anderen Reifensystemen empfangen werden, welche mit den jeweiligen Zuständen dieser Reifen in Beziehung stehen, sowie Daten, die mit dem Zustand seines eigenen Reifens in Beziehung stehen, zu speichern, so dass, wenn das jeweilige Reifensystem ausgewählt wird, um Informationen mit der Kommunikationseinrichtung (28, 76) auszutauschen, die Daten, die mit den jeweiligen Zuständen aller Reifen des Fahrzeugs in Beziehung stehen, von dem jeweiligen Reifensystem an die Kommunikationseinrichtung übertragen werden.

22. Netz nach Anspruch 21, wobei der mindestens eine Speicher (18) in jedem der Reifen (4) integriert ist.

23. Netz nach einem der Ansprüche 14 bis 16, wobei, wenn das Fahrzeug (6) sich nicht bewegt und die Kommunikationseinrichtung (28, 76) keine Daten von den Reifensystemen (2) anfordert, keine Daten von irgendeinem der Reifensysteme an die Kommunikationseinrichtung gesendet werden, wobei die Reifensysteme das Übertragen von Daten an die Kommunikationseinrichtung wieder aufnehmen, wenn die Reifen beginnen, sich zu bewegen, wenn eine Statusanfrage von der Kommunikationseinrichtung empfangen wird, oder wenn der Luftdruck in irgendeinem der Reifen als unter einem vorbestimmten Druck befindlich erfasst wird.

24. Netz nach einem der Ansprüche 14 bis 16, wobei jedes der Reifensysteme (2) der Reifen des Fahrzeugs darüber hinaus umfasst:
einen Energiespeicher (10), um dem Transceivermittel (16) und dem Prozessormittel (14) in dem jeweiligen Reifensystem elektrische Energie zuzuführen; und
ein Energieumwandlungsmittel (8, 12), das mit dem Energiespeicher (10) elektrisch verbunden ist, wobei das Energieumwandlungsmittel die Bewegung des jeweiligen Reifens in elektrische Energie umwandelt, wobei die umgewandelte elektrische Energie dem Energiespeicher zur Speicherung zugeführt wird.

25. Netz nach Anspruch 24, wobei der Energiespeicher (10) in jedem der Reifen (4) integriert ist.

26. Verfahren zum Befördern der jeweiligen Zustände von Reifen, die an einem Fahrzeug beweglich montiert sind, zu einem Bediener, mit den Schritten, dass:
an jedem der Reifen ein Reifensystem (2) vorgesehen wird, das elektrisch oder elektromagnetisch verbundene Sensormittel (20, 22, 24, 26), Transceivermittel (16) und Prozessormittel (14) aufweist,
wobei das Sensormittel in jedem der Reifen mindestens einen Parameter jedes Reifens misst, der den Zustand des jeweiligen Reifens widerspiegelt;
ein mobiles Kommunikationsmittel (28, 76) vorgesehen wird, das geeignet ist, um mit jedem der Reifensysteme (2) in Verbindung zu stehen; und
die Reifensysteme und das mobile Kommunikationsmittel gemäß einem drahtlosen Datenübertragungsprotokoll betrieben werden, so dass das mobile Kommunikationsmittel eine Datenverbindung mit irgendeinem der Reifensysteme herstellen kann, um von diesem Daten zu empfangen, die mindestens den Zustand dieses jeweiligen Reifens angeben (44, 46),
**dadurch gekennzeichnet, dass** das Verfahren den Schritt umfasst, dass:
die Reifensysteme derart konfiguriert werden, dass sie in der Lage sind, untereinander drahtlos zu kommunizieren.

27. Verfahren nach Anspruch 26, wobei die Sensormittel, Transceivermittel und Prozessormittel elektrisch miteinander verbunden und in jedem der Reifen integriert werden, und wobei die Reifen und das mobile Kommunikationsmittel gemäß einem drahtlosen Datenübertragungsprotokoll (54) betrieben werden.

28. Verfahren nach Anspruch 26 oder 27, wobei das mobile Kommunikationsmittel (28, 76) eine mobile Kommunikationseinrichtung umfasst, die dem Bediener zur Verfügung gestellt wird.

29. Verfahren nach Anspruch 26, das darüber hinaus den Schritt umfasst, dass:
dem jeweiligen Reifensystem, das eine Anfrage an die Kommunikationseinrichtung über sein entsprechendes Transceivermittel überträgt (56), fragt, ob die Kommunikationseinrichtung die Daten, die von seinem Prozessormittel erzeugt werden, empfangen möchte.

30. Verfahren nach Anspruch 26, wobei die Kommunikationseinrichtung ein Mobiltelefon umfasst und wobei das jeweilige Transceivermittel der Reifensysteme jeweils ein Kommunikationsmodul umfasst, wobei das Verfahren darüber hinaus die Schritte umfasst, dass:
Daten der Reifen zwischen den Reifensystemen ausgetauscht werden (48);
ein ausgewähltes System der Reifensysteme dazu bestimmt wird, als ein Server zu wirken, und das Mobiltelefon dazu bestimmt wird, als ein Browser zu wirken; und
Daten, die von dem Sensormittel der jeweiligen Reifen gemessen werden, welche mit Zuständen der jeweiligen Reifen in Beziehung stehen, von dem Server-Reifensystem über sein Kommunikationsmodul an das Mobiltelefon gesendet werden (64).

31. Verfahren nach einem der Ansprüche 26 bis 28, wobei die Kommunikationseinrichtung ein Mobiltelefon umfasst und wobei das Verfahren darüber hinaus den Schritt umfasst, dass:
bewirkt wird, dass die Reifensysteme der Reifen, die an dem Fahrzeug montiert sind, einzeln mit dem Mobiltelefon kommunizieren, so dass jedes der Reifensysteme unabhängig Daten mit dem Mobiltelefon austauscht und Daten, die den Zustand jedes Reifens darstellen, separat an das Mobiltelefon überträgt.

32. Verfahren nach einem der Ansprüche 26 bis 28, wobei das Sensormittel in jedem der Reifensysteme mindestens einen Drucksensor, um den Luftdruck jedes Reifens zu messen, und mindestens einen Temperatursensor, um die Temperatur jedes Reifens zu messen, umfasst, wobei das Verfahren darüber hinaus den Schritt umfasst, dass:
ein in Bezug auf die Temperatur korrigierter Luftdruck des jeweiligen Reifens berechnet wird, indem der gemessene Luftdruck mit der gemessenen Temperatur kompensiert wird (38).

33. Verfahren nach einem der Ansprüche 26 bis 28, wobei die Reifensysteme der Reifen des Fahrzeugs jeweils Daten, die mit dem Zustand seines eigenen Reifens in Beziehung stehen, mit den anderen Reifensystemen austauschen, das darüber hinaus die Schritte umfasst, dass:
für jedes der Reifensysteme der Reifen des Fahrzeugs mindestens ein Speicher vorgesehen wird, um die Daten, die von den anderen Reifensystemen empfangen werden und mit den jeweiligen Zuständen jener Reifen in Beziehung stehen, sowie Daten, die mit dem Zustand seines eigenen Reifens in Beziehung stehen, zu speichern (50, 42); und
die Daten, die mit den jeweiligen Zuständen aller Reifen des Fahrzeugs in Beziehung stehen, an die Kommunikationseinrichtung von irgendeinem der Reifensysteme übertragen werden, wenn das jeweilige Reifensystem ausgewählt wird, um Informationen mit der Kommunikationseinrichtung auszutauschen (64).

34. Verfahren nach Anspruch 33, wobei der mindestens eine Speicher (18) in jedem der Reifen integriert wird.

35. Verfahren nach einem der Ansprüche 26 bis 28, das darüber hinaus die Schritte umfasst, dass:
die Übertragung von Daten von den Reifensystemen zu der Kommunikationseinrichtung gestoppt wird, wenn sich das Fahrzeug nicht bewegt (66) und die Kommunikationseinrichtung keine Daten von den Reifensystemen anfordert (70); und
die Übertragung von Daten an die Kommunikationseinrichtung wieder aufgenommen wird, wenn die Reifen beginnen, sich zu bewegen (68), wenn eine Statusanfrage von der Kommunikationseinrichtung empfangen wird, oder wenn der Luftdruck in irgendeinem der Reifen als unter einem vorbestimmten Druck befindlich erfasst wird.

36. Verfahren nach einem der Ansprüche 26 bis 28, das darüber hinaus die Schritte umfasst, dass:
ein Energieumwandlungsmittel für jedes der Reifensysteme der Reifen des Fahrzeugs vorgesehen wird, um die Bewegung jedes Reifens in elektrische Energie umzuwandeln;
für jedes der Reifensysteme ein Energiespeicher vorgesehen wird, um dem Transccivermittel und dem Prozessormittel in dem jeweiligen Reifensystem elektrische Energie zuzuführen;
ein Energieumwandlungsmittel mit dem Energiespeicher elektrisch verbunden wird; und
die umgewandelte elektrische Energie dem Energiespeicher zur Speicherung zugeführt wird.

37. Verfahren nach Anspruch 36, wobei das Energieumwandlungsmittel und der Energiespeicher in jedem der Reifen integriert werden.

38. Verfahren nach einem der Ansprüche 26 bis 28, wobei die Kommunikationseinrichtung ein Mobiltelefon umfasst, wobei das Verfahren darüber hinaus die Schritte umfasst, dass:
eines der Reifensysteme als ein Server-Reifensystem bestimmt wird; eine periodische Kommunikation zwischen dem Server-Reifensystem und dem Mobiltelefon bewirkt wird, wobei das Server-Reifensystem in jeder vorbestimmten Zeitperiode aktualisierte Daten, die mit den jeweiligen Zuständen der Reifen in Beziehung stehen, an das Mobiltelefon sendet (48, 52);
ein Warnsignal von dem Server-Reifensystem sofort an das Mobiltelefon übertragen wird, wenn ein ausgewählter Parameter der gemessenen Parameter der Reifen einen gegebenen Schwellenwert übersteigt (72); und
die Kommunikationsverbindung zwischen dem Server-Reifensystem und dem Mobiltelefon aufrechterhalten wird, bis sich das Fahrzeug nicht bewegt (32) und das Mobiltelefon nicht länger anfordert, an dieses aktualisierte Daten zu übertragen (36).

39. System, umfassend
eine Vielzahl von Reifen (4), die jeweils beweglich an einem Fahrzeug (6) montiert sind, wobei jeder der Reifen in einer Arbeitsbeziehung damit ein Reifensystem (2) aufweist, das elektrisch oder elektromagnetisch verbundene Sensormittel (20, 22, 24, 26), Transceivermittel (16) und Prozessormittel (14) aufweist, wobei die Reifensysteme in der Lage sind, untereinander drahtlos zu kommunizieren,
wobei das Sensormittel in jedem der Reifensysteme mindestens einen Parameter des jeweiligen Reifens misst, der den Zustand jedes Reifens widerspiegelt;
eine Fernkommunikationseinrichtung (28), die geeignet ist, um mit jedem der Reifensysteme (2) in Verbindung zu stehen, wobei die Fernkommunikationseinrichtung einen begrenzten Kommunikationsbereich mit den Reifensystemen aufweist; und
eine weitere Kommunikationseinrichtung (76) in dem Fahrzeug, die geeignet ist, um mit den Reifensystemen (2) zu kommunizieren und mit der Fernkommunikationseinrichtung (28) telefonisch zu kommunizieren, indem eine Kommunikationsstrecke damit über ein Telekommunikationsnetz hergestellt wird;
wobei die Reifensysteme (2) der Fernkommunikationseinrichtung (28) Informationen mit entweder allen Reifensystemen oder mit nur ausgewählten Systemen der Reifensysteme austauschen, um Daten, die die jeweiligen Zustände der Reifensysteme angeben, zu empfangen, während die Fernkommunikationseinrichtung sich innerhalb des Kommunikationsbereiches der Reifensysteme befindet;
wobei die Reifensysteme (2) darüber hinaus Daten, die die jeweiligen Zustände der Reifen angeben, mit der weiteren Kommunikationseinrichtung (76) austauschen; und
wobei, wenn die Fernkommunikationseinrichtung (28) nicht in der Lage ist, direkt mit den Reifensystemen (2) zu kommunizieren, die weitere Kommunikationseinrichtung (76) die Kommunikationsstrecke mit der Kommunikationseinrichtung (28) über das Telekommunikationsnetz herstellt, um die Daten, die die jeweiligen Zustände der Reifensysteme angeben, an die Fernkommunikationseinrichtung weiterzuleiten.

40. System nach Anspruch 39, wobei in jedem der Reifen (4) die elektrisch verbundenen Sensormittel (20, 22, 24, 26), Transceivermittel (16) und Prozessormittel (14) integriert sind, und wobei die Reifen und die Fernkommunikationseinrichtung (28) Informationen austauschen können.

41. System nach Anspruch 39 oder 40, wobei die Fernkommunikationseinrichtung (28) und ein ausgewähltes Reifensystem (2) oder ein ausgewählter Reifen eingerichtet sind, um Informationen auszutauschen.

42. System nach Anspruch 41, wobei die Fernkommunikationseinrichtung (28) ein Mobiltelefon umfasst, und wobei das jeweilige Transceivermittel (16) der Reifensysteme jeweils ein Kommunikationsmodul umfasst, wobei das Mobiltelefon und die jeweiligen Kommunikationsmodule gemäß einem drahtlosen Datenübertragungsprotokoll arbeiten; und
wobei ein ausgewähltes System der Reifensysteme (2) als ein Server wirkt, und das Mobiltelefon (28) als ein Browser wirkt, um Daten zwischen den Reifensystemen und entweder dem Mobiltelefon oder der weiteren Kommunikationseinrichtung (76) in dem Fahrzeug auszutauschen, wobei Daten, die von dem Sensormittel (20, 22, 24, 26) der jeweiligen Reifen gemessen werden und mit den Zuständen der jeweiligen Reifen in Beziehung stehen, von dem Server-Reifensystem entweder direkt an das Mobiltelefon gesendet werden oder mittels der weiteren Kommunikationseinrichtung in dem Fahrzeug an das Mobiltelefon weitergeleitet werden.

43. System nach einem der Ansprüche 39 bis 41, wobei die Fernkommunikationseinrichtung (28) ein Mobiltelefon umfasst, und die weitere Kommunikationseinrichtung (76) ein weiteres Mobiltelefon umfasst, das sich in dem Fahrzeug befindet und kommunikativ mit dem Telekommunikationsnetz verbindbar ist, und
wobei die Reifensysteme (2) der Reifen, die an dem Fahrzeug montiert sind, entweder gemeinsam oder jeweils unabhängig Daten mit dem weiteren Mobiltelefon (76) austauschen, wenn das eine Mobiltelefon (28) nicht in der Lage ist, direkt mit den Reifensystemen zu kommunizieren, so dass Daten, die den Zustand jedes Reifens darstellen, an das eine Mobiltelefon von dem weiteren Mobiltelefon über das Telekommunikationsnetz weitergeleitet werden.

44. System nach Anspruch 39 oder 40, wobei das Sensormittel (20, 22, 24, 26) in jedem der Reifensysteme mindestens einen Drucksensor (22), um den Luftdruck jedes Reifens zu messen, und mindestens einen Temperatursensor (20), um die Temperatur jedes Reifens zu messen, umfasst, wobei ein in Bezug auf die Temperatur korrigierter Luftdruck des jeweiligen Reifens erhalten wird, indem der gemessene Luftdruck mit der gemessenen Temperatur kompensiert wird.

45. Verfahren nach einem der Ansprüche 26 bis 38, wobei das mobile Kommunikationsmittel (28, 76) darüber hinaus eine weitere Kommunikationseinrichtung (76) umfasst, wobei das Verfahren die Schritte umfasst, dass:
die weitere Kommunikationseinrichtung (76) in dem Fahrzeug bereitgestellt wird, wobei die weitere Kommunikationseinrichtung geeignet ist, um mit einem Telekommunikationsnetz in Verbindung zu stehen;
eine Kommunikationsstrecke zwischen der weiteren Kommunikationseinrichtung (76) und dem Telekommunikationsnetz und eine weitere Kommunikationsstrecke zwischen der mobilen Kommunikationseinrichtung (28) und dem Telekommunikationsnetz hergestellt werden, wenn die mobile Kommunikationseinrichtung keine direkte Datenverbindung mit irgendeinem der Reifensysteme (2) herstellen kann; und
Daten, die die jeweiligen Zustände der Reifen angeben und von der weiteren Kommunikationseinrichtung (76) empfangen werden, an die mobile Kommunikationseinrichtung (28) unter Verwendung der einen und der weiteren Telekommunikationsstrecke weitergeleitet werden.

46. Verfahren nach Anspruch 45, wobei die weitere Kommunikationseinrichtung (76) ein Teil der Folgenden umfasst: ein Web-fähiges Mobiltelefon, einen Web-fähigen persönlichen digitalen Assistenten (PDA) und einen Laptop-Computer mit einer Fähigkeit zur drahtlosen Telekommunikation.

## Revendications

1. Ensemble constitué d'un véhicule (6) comportant une pluralité de pneumatiques (4) montés sur celui-ci de manière mobile, chacun desdits pneumatiques étant en relation fonctionnelle avec un système (2) pouvant être adapté pour communiquer avec un moyen de communications mobile (28, 76), ledit système comprenant :
un moyen formant capteur (20, 22, 24, 26) destiné à mesurer au moins un des paramètres qui affectent la performance de chacun desdits pneumatiques ; et
un moyen formant émetteur-récepteur (16) connecté électriquement ou de manière électromagnétique audit moyen formant capteur pour sortir et recevoir des données vers et provenant dudit système ;
**caractérisé en ce que** chacun desdits systèmes desdits pneumatiques montés sur ledit véhicule peut être adapté pour communiquer avec les systèmes des autres pneumatiques montés de manière mobile sur ledit véhicule et peut en outre être adapté pour faire office de serveur afin de communiquer avec ledit moyen de communications mobile (28,76).

2. Ensemble selon la revendication 1, dans lequel chacun desdits pneumatiques (4) intègre ledit système (2) ; dans lequel dans ledit système ledit moyen formant émetteur-récepteur (16) et ledit moyen formant capteur (20, 22, 24, 26) est électriquement interconnecté ; et dans lequel chacun desdits pneumatiques peut être adapté pour communiquer avec les autres pneumatiques.

3. Ensemble selon la revendication 1, dans lequel chacun desdits pneumatiques (4) comporte ledit système (2), qui peut être adapté pour être intégré audit pneumatique, prévu à l'intérieur du pneumatique, ou couplé à la jante autour de laquelle ledit pneumatique est monté.

4. Ensemble selon la revendication 2, dans lequel ledit système (2) comprend en outre :
un moyen formant processeur (14) connecté électriquement audit moyen formant capteur (20, 22, 24, 26) et audit moyen formant émetteur-récepteur (16), ledit moyen formant processeur utilisant les paramètres reçus dudit moyen formant capteur pour générer des données concernant l'état de chacun desdits pneumatiques, ledit moyen formant processeur émettant une interrogation vers ledit moyen de communications mobile (28, 76) par l'intermédiaire dudit moyen formant émetteur-récepteur demandant audit moyen de communications mobile s'il souhaite ou non recevoir les données.

5. Ensemble selon la revendication 1 ou 3, dans lequel ledit système (2) comprend en outre :
un moyen formant processeur (14) utilisant les paramètres reçus dudit moyen formant capteur (20, 22, 24, 26) pour générer des données concernant l'état de chacun desdits pneumatiques et émettant une interrogation vers ledit moyen de communications mobile (28, 76) par l'intermédiaire dudit moyen formant émetteur-récepteur (16) demandant si ledit moyen de communications mobile souhaite ou non recevoir les données.

6. Ensemble selon l'une quelconque des revendications 1 à 3, dans lequel le moyen formant capteur (20, 22, 24, 26) dans chacun desdits systèmes (2) comprend au moins un capteur de pression (22) destiné à mesurer la pression de l'air dans chacun desdits pneumatiques et au moins un capteur de température (20) destiné à mesurer la température de chacun desdits pneumatiques, une pression de l'air corrigée en fonction de la température de chacun desdits pneumatiques étant obtenue par compensation de la pression d'air mesurée avec la température mesurée.

7. Ensemble selon l'une quelconque des revendications 1 à 3, dans lequel ledit moyen de communications mobile (28, 76) comprend un téléphone mobile basé sur le protocole d'application sans fil (WAP) (28) ; et
dans lequel les système (2) qui fait office de serveur émet une interrogation vers ledit téléphone mobile faisant office de navigateur pour demander audit téléphone mobile s'il souhaite ou non recevoir des données représentatives des états respectifs desdits pneumatiques lorsque ledit téléphone mobile se trouve à une distance donnée dudit véhicule.

8. Ensemble selon l'une quelconque des revendications 1 à 3, dans lequel ledit moyen de communications mobile (28, 76) comprend un téléphone mobile WAP (protocole d'application sans fil) (28) ; et
Dans lequel ledit système (2) desdits pneumatiques montés sur ledit véhicule échangent chacun des données avec ledit téléphone mobile de sorte que les données représentatives de l'état de chacun desdits pneumatiques soient séparément émises vers ledit téléphone mobile.

9. Ensemble selon l'une quelconque des revendications 1 à 3, dans lequel lesdits systèmes (2) desdits pneumatiques dudit véhicule échangent chacun des données concernant l'état de son propre pneumatique avec les systèmes des autres pneumatiques ; et
dans lequel le système (2) de chacun desdits pneumatiques dudit véhicule comprend en outre au moins une mémoire (18) destinée à stocker les données échangées avec les autres systèmes ainsi que les données concernant l'état de son propre pneumatique de sorte que lorsque chacun desdits systèmes fait office de serveur, les données concernant les états respectifs de l'ensemble des pneumatiques dudit véhicule soient transmises par chacun desdits systèmes vers ledit moyen de communications mobile (28, 76).

10. Ensemble selon l'une quelconque des revendications 1 à 3, dans lequel ledit système (2) passe en mode veille si ledit véhicule n'est pas en service et ledit moyen de communications mobile (28, 76) ne demande pas des données auxdits systèmes.

11. Ensemble selon l'une quelconque des revendications 1 à 3, dans lequel ledit moyen de communications mobile (28, 76) comprend un téléphone mobile et ledit moyen formant émetteur-récepteur (16) comprend un module de communication ; et
dans lequel les systèmes respectifs (2) desdits pneumatiques et ledit téléphone mobile (28) fonctionnent tous sous le protocole de liaison de données sans fil Bluetooth.

12. Ensemble selon la revendication 4, comprenant en outre :
un dispositif de stockage d'énergie (10) destiné à fournir une énergie électrique audit moyen formant émetteur-récepteur (16) et audit moyen formant processeur (14) ; et
un moyen de transformation d'énergie (8,12) connecté électriquement audit dispositif de stockage d'énergie (10), ledit moyen de transformation d'énergie transformant le mouvement dudit pneumatique en énergie électrique, l'énergie électrique transformée étant acheminée vers ledit dispositif de stockage d'énergie pour y être stocké.

13. Ensemble selon la revendication 7, dans lequel ledit système (2) formant serveur et ledit téléphone mobile (28) communiquent périodiquement l'un avec l'autre, ledit système formant serveur envoyant des données mises à jour concernant les états respectifs desdits pneumatiques vers ledit téléphone mobile à chaque période de temps prédéterminée, ledit système formant serveur émettant immédiatement un signal d'avertissement audit téléphone mobile si un sélectionné parmi les paramètres mesurés desdits pneumatiques atteint ou dépasse un seuil donné ; et
dans lequel ledit système formant serveur (2) et ledit téléphone mobile (28) continuent à communiquer l'un avec l'autre et des données mises à jour continuent d'être émises vers ledit téléphone mobile à partir dudit système formant serveur jusqu'à ce que ledit véhicule ne se déplace plus et jusqu'à ce que le téléphone mobile ne demande plus que des données mises à jour lui soient transmises.

14. Réseau de télécommunications comprenant :
une pluralité de pneumatiques (4) montés de manière mobile sur un véhicule (6), chacun desdits pneumatiques étant en relation fonctionnelle avec un système (2) de pneumatique ayant un moyen formant capteur (20, 22, 24, 26) interconnecté électriquement ou de manière électromagnétique, un moyen formant émetteur-récepteur (16), et un moyen formant processeur (14), lesdits systèmes de pneumatique étant capable de communiquer sans fil les uns avec les autres, le moyen formant capteur dans chacun desdits systèmes de pneumatique mesurant au moins un paramètre de chacun desdits pneumatiques qui reflète l'état de chacun desdits pneumatiques ; et
un dispositif de communication à distance (28, 76) pouvant être adapté pour être en communication avec chacun desdits systèmes (2) de pneumatique ;
dans lequel lesdits systèmes (2) de pneumatique et ledit dispositif de communication (28, 76) fonctionnent tous sous un protocole de liaison de données sans fil de sorte que ledit dispositif de communication puisse échanger des informations soit avec l'ensemble desdits systèmes de pneumatique soit avec un seul sélectionné parmi lesdits systèmes de pneumatique afin de recevoir des données indiquant les états respectifs desdits pneumatiques.

15. Réseau selon la revendication 14, dans lequel chacun desdits pneumatiques intègre lesdits moyens formant capteur (20, 22, 24, 26) électriquement interconnectés, le moyen formant émetteur-récepteur (16) et le moyen formant processeur (14); et dans lequel lesdits pneumatiques et ledit dispositif de communication (28, 76) fonctionnent tous sous ledit protocole de liaison de données sans fil.

16. Réseau selon la revendication 14 ou 15, dans lequel ledit dispositif de communication (28, 76) et un seul système (2) de pneumatique sélectionné ou pneumatique sont agencés pour échanger des informations.

17. Réseau selon la revendication 16, dans lequel ledit dispositif de communication (28, 76) comprend un téléphone mobile
et dans lequel les moyens formant émetteur-récepteur respectifs (16) desdits systèmes pneumatiques comprennent chacun un module de communications, ledit téléphone mobile (28, 76) et ledit module de communications respectif fonctionnant sous un protocole de liaison de données sans fil ; et
dans lequel un sélectionné parmi lesdits systèmes (2) de pneumatique fait office de serveur et ledit téléphone mobile (28, 76) fait office de navigateur pour ledit réseau, les données mesurées par les moyens formant capteur (20, 22, 24, 26) desdits pneumatiques respectifs concernant les états desdits pneumatiques respectifs étant envoyées depuis ledit système de pneumatique formant serveur vers ledit téléphone mobile.

18. Réseau selon l'une quelconque des revendications 14 à 16, dans lequel le moyen formant capteur (20, 22, 24, 26) dans chacun desdits systèmes (2) de pneumatique comprend au moins un capteur de pression (22) destiné à mesurer la pression de l'air dans chacun desdits pneumatiques et au moins un capteur de température (20) destiné à mesurer la température de chacun desdits pneumatiques, une pression de l'air corrigée en fonction de la température de chacun desdits pneumatiques étant obtenue par compensation de la pression d'air mesurée avec la température mesurée.

19. Réseau selon la revendication 14 ou 15, dans lequel ledit dispositif de communication (28, 76) comprend un téléphone mobile et dans lequel lesdits systèmes (2) de pneumatique desdits pneumatiques montés sur ledit véhicule échangent chacun indépendamment des données avec ledit téléphone mobile de sorte que les données représentatives de l'état de chacun desdits pneumatiques soient séparément émises vers ledit téléphone mobile.

20. Réseau selon l'une quelconque des revendications 14 à 16, dans lequel le moyen formant processeur (14) de chacun desdits systèmes (2) de pneumatique est agencé de façon à utiliser le paramètre mesuré par son moyen formant capteur correspondant (20, 22, 24, 26) afin de générer des données concernant l'état de chacun desdits pneumatiques et le moyen formant processeur de chacun desdits systèmes de pneumatique pouvant être adapté pour émettre une interrogation vers ledit dispositif de communication (28, 76) par l'intermédiaire de son moyen formant émetteur-récepteur correspondant qui demande audit dispositif de communication s'il souhaite ou non recevoir les données ainsi générées.

21. Réseau selon l'une quelconque des revendications 14 à 16, dans lequel lesdits systèmes (2) de pneumatique desdits pneumatiques du véhicule échangent chacun des données concernant l'état de son propre pneumatique avec les autres systèmes de pneumatique ; et
dans lequel chacun desdits systèmes (2) de pneumatique dudit véhicule comporte en outre au moins une mémoire (18) destinée à stocker les données reçues des autres systèmes de pneumatique concernant les états respectifs de ces pneumatiques ainsi que les données concernant l'état de son propre pneumatique de sorte que lorsque chacun desdits systèmes de pneumatique est sélectionné pour échanger des informations avec ledit dispositif de communication (28, 76), les données concernant les états respectifs de l'ensemble des pneumatiques dudit véhicule soient transmises par chacun desdits systèmes de pneumatique vers ledit dispositif de communication.

22. Réseau selon la revendication 21, dans lequel chacun desdits pneumatiques (4) intègre ladite au moins une mémoire (18).

23. Réseau selon l'une quelconque des revendications 14 à 16, dans lequel lorsque ledit véhicule (6) ne se déplace pas et lorsque ledit dispositif de communication (28, 76) ne demande pas de données auxdits systèmes (2) de pneumatique, aucune donnée n'est envoyée par aucun desdits systèmes de pneumatique vers ledit dispositif de communication, lesdits systèmes de pneumatique reprenant l'émission de données vers ledit dispositif de communication lorsque lesdits pneumatiques commencent à se déplacer, lorsqu'une demande d'état est reçue par ledit dispositif de communication ou lorsque la pression de l'air dans l'un quelconque desdits pneumatiques est détectée comme étant inférieure à une pression prédéterminée.

24. Réseau selon l'une quelconque des revendications 14 à 16, dans lequel chacun desdits systèmes (2) de pneumatique desdits pneumatiques dudit véhicule comprend en outre :
un dispositif de stockage d'énergie (10) destiné à fournir une énergie électrique au moyen formant émetteur-récepteur (16) et au moyen formant processeur (14) dans chacun desdits systèmes de pneumatique ; et
un moyen de transformation d'énergie (8, 12) connecté électriquement audit dispositif de stockage d'énergie (10), ledit moyen de transformation d'énergie transformant le mouvement de chacun desdits pneumatiques en énergie électrique, l'énergie électrique transformée étant acheminée vers ledit dispositif de stockage d'énergie pour y être stockée.

25. Réseau selon la revendication 24, dans lequel ledit dispositif de stockage d'énergie (10) est intégré à chacun desdits pneumatiques (4).

26. Procédé destiné à transmettre les états respectifs des pneumatiques montés de manière mobile sur un véhicule à un opérateur, comprenant les étapes consistant à :
fournir à chacun desdits pneumatiques un système (2) de pneumatique ayant un moyen formant capteur interconnecté électriquement ou de manière électromagnétique (20, 22, 24, 26), un moyen formant émetteur-récepteur (16) et un moyen formant processeur (14), le moyen formant capteur dans chacun desdits pneumatiques mesurant au moins un paramètre de chacun desdits pneumatiques qui reflète l'état de chacun desdits pneumatiques ;
fournir un moyen de communications mobile (28, 76) pouvant être adapté pour être en communication avec chacun desdits systèmes (2) de pneumatique ; et
faire fonctionner lesdits systèmes de pneumatique et ledit moyen de communications mobile sous un protocole de liaison de données sans fil de sorte que ledit moyen de communications mobile puisse établir une liaison de données (44, 46) avec l'un quelconque desdits systèmes de pneumatique pour recevoir de celui-ci des données indiquant au moins l'état dudit un quelconque pneumatique,
**caractérisé en ce que** le procédé comprend l'étape consistant à :
configurer lesdits systèmes de pneumatique pour qu'ils soient capables de communiquer sans fil les uns avec les autres.

27. Procédé selon la revendication 26, dans lequel ledit moyen formant capteur, ledit moyen formant émetteur-récepteur et ledit moyen formant processeur sont interconnectés électriquement et intégrés à chacun desdits pneumatiques et dans lesquels lesdits pneumatiques et ledit moyen de communications mobile fonctionnent sous un protocole de liaison de données sans fil (54).

28. Procédé selon la revendication 26 ou 27, dans lequel ledit moyen de communications mobile (28, 76) comprend un dispositif de communication mobile fourni audit opérateur.

29. Procédé selon la revendication 26, comprenant en outre l'étape consistant à :
faire émettre par ledit un quelconque système de pneumatique une interrogation vers ledit dispositif de communication (56) par l'intermédiaire de son moyen formant émetteur-récepteur correspondant pour demander audit dispositif de communication s'il souhaite ou non recevoir les données générées par son moyen formant processeur.

30. Procédé selon la revendication 26, dans lequel ledit dispositif de communication comprend un téléphone mobile et dans lequel les moyens formant émetteur-récepteur respectifs desdits systèmes de pneumatique comprennent chacun un module de communications, ledit procédé comprenant en outre les étapes consistant à :
échanger des données concernant lesdits pneumatiques entre lesdits systèmes (48) de pneumatique ;
désigner un sélectionné parmi lesdits systèmes de pneumatique en tant que serveur et ledit téléphone mobile en tant que navigateur ; et
envoyer des données mesurées par le moyen formant capteur desdits pneumatiques respectifs concernant les états desdits pneumatiques respectifs depuis ledit système de pneumatique formant serveur par l'intermédiaire de son module de communications vers ledit téléphone mobile (64).

31. Procédé selon l'une quelconque des revendications 26 à 28, dans lequel ledit dispositif de communication comprend un téléphone mobile, et dans lequel ledit procédé comprend en outre les étapes consistant à :
faire fonctionner lesdits systèmes de pneumatique desdits pneumatiques montés sur ledit véhicule pour qu'ils communiquent individuellement avec ledit téléphone mobile de sorte que chacun desdits systèmes de pneumatique échangent indépendamment des données avec ledit téléphone mobile et transmettent séparément audit téléphone mobile les données représentant l'état de chacun desdits pneumatiques.

32. Procédé selon l'une quelconque des revendications 26 à 28, dans lequel le moyen formant capteur dans chacun desdits systèmes de pneumatique comprend au moins un capteur de pression destiné à mesurer la pression de l'air dans chacun desdits pneumatiques et au moins un capteur de température destiné à mesurer la température de chacun desdits pneumatiques, dans lequel ledit procédé comprend en outre l'étape consistant à :
calculer une pression d'air corrigée en fonction de la température de chacun desdits pneumatiques par compensation de la pression de l'air mesurée avec la température mesurée (38).

33. Procédé selon l'une quelconque des revendications 26 à 28, dans lequel lesdits systèmes de pneumatique desdits pneumatiques dudit véhicule échangent chacun des données concernant l'état de son propre pneumatique avec les autres systèmes de pneumatique, comprenant en outre les étapes consistant à :
fournir à chacun desdits systèmes de pneumatique desdits pneumatiques dudit véhicule au moins une mémoire pour stocker les données reçues des autres systèmes de pneumatique concernant les états respectifs de ces pneumatiques ainsi que les données concernant l'état de son propre pneumatique (50, 42) ; et
émettre les données concernant les états respectifs de l'ensemble des pneumatiques dudit véhicule vers ledit dispositif de communication depuis l'un quelconque desdits systèmes de pneumatique lorsque l'un desdits systèmes de pneumatique est sélectionné pour échanger des informations avec ledit dispositif de communication (64).

34. Procédé selon la revendication 33, dans lequel ladite au moins une mémoire (18) est intégrée à chacun desdits pneumatiques.

35. Procédé selon l'une quelconque des revendications 26 à 28, comprenant en outre les étapes consistant à :
arrêter la transmission des données depuis lesdits systèmes de pneumatique vers ledit dispositif de communication lorsque ledit véhicule ne se déplace pas (66) et ledit dispositif de communication ne demande pas de données auxdits systèmes (70) de pneumatique ; et
reprendre la transmission de données vers ledit dispositif de communication lorsque lesdits pneumatiques commencent à se déplacer (68), lorsqu'une demande d'état est reçue dudit dispositif de communication ou lorsque la pression de l'air dans l'un quelconque desdits pneumatiques est détectée comme étant inférieure à une pression prédéterminée.

36. Procédé selon l'une quelconque des revendications 26 à 28, comprenant en outre les étapes consistant à :
fournir un moyen de transformation d'énergie à chacun desdits systèmes de pneumatique desdits pneumatiques dudit véhicule pour transformer le mouvement de chacun desdits pneumatiques en énergie électrique ;
fournir à chacun desdits systèmes de pneumatique un dispositif de stockage d'énergie destiné à fournir une énergie électrique au moyen formant émetteur-récepteur et au moyen formant processeur dans chacun desdits systèmes de pneumatique ;
connecter électriquement un moyen de transformation d'énergie audit dispositif de stockage d'énergie ; et
acheminer l'énergie électrique transformée vers ledit dispositif de stockage d'énergie pour la stocker.

37. Procédé selon la revendication 36, dans lequel ledit moyen de transformation d'énergie et ledit dispositif de stockage d'énergie sont intégrés à chacun desdits pneumatiques.

38. Procédé selon l'une quelconque des revendications 26 à 28, dans lequel ledit dispositif de communication comprend un téléphone mobile, ledit procédé comprenant en outre les étapes consistant à :
désigner un desdits systèmes de pneumatique comme système de pneumatique formant serveur ;
effectuer une communication périodique entre ledit système de pneumatique formant serveur et ledit téléphone mobile, ledit système de pneumatique formant serveur envoyant les données mises à jour concernant les états respectifs desdits pneumatiques vers ledit téléphone mobile à chaque période de temps prédéterminée (48, 52) ;
émettre immédiatement un signal d'avertissement provenant dudit système de pneumatique formant serveur vers ledit téléphone mobile si un sélectionné parmi les paramètres mesurés desdits pneumatiques dépasse un seuil donné (72) ; et
maintenir la liaison de communications entre ledit système de pneumatique formant serveur et ledit téléphone mobile jusqu'à ce que ledit véhicule ne se déplace plus (32) et jusqu'à ce que ledit téléphone mobile ne demande plus que lui soit transmis des données mises à jour (36).

39. Système comprenant:
une pluralité de pneumatiques (4) montés chacun de manière mobile sur un véhicule (6), chacun desdits pneumatiques étant en relation fonctionnelle avec un système (2) de pneumatique ayant un moyen formant capteur (20, 22, 24, 26) interconnecté électriquement ou de manière électromagnétique, un moyen formant émetteur-récepteur (16) et un moyen formant processeur (14), lesdits systèmes de pneumatique étant capables de communiquer sans fil les uns avec les autres, le moyen formant capteur dans chacun desdits systèmes de pneumatique mesurant au moins un paramètre de chacun desdits pneumatiques qui reflète l'état de chacun desdits pneumatiques ;
un dispositif de communication à distance (28) pouvant être adapté pour être en communication avec chacun desdits systèmes (2) de pneumatique, ledit dispositif de communication à distance ayant une portée de communication limitée avec lesdits systèmes de pneumatique ; et
un autre dispositif de communication (76) dans ledit véhicule pouvant être adapté pour communiquer avec lesdits systèmes (2) de pneumatique et télécommuniquer avec ledit dispositif de communication à distance (28) par établissement d'une voie de communications avec celui-ci par l'intermédiaire d'un réseau de télécommunications ;
dans lequel lesdits systèmes (2) de pneumatique et ledit dispositif de communication à distance (28) peuvent échanger des informations soit avec l'ensemble desdits systèmes de pneumatique soit avec un seul sélectionné parmi lesdits systèmes de pneumatique pour recevoir des données indiquant les états respectifs desdits systèmes de pneumatique tandis que ledit dispositif de communication à distance se trouve dans ladite portée de communication desdits systèmes de pneumatique ;
dans lequel lesdits systèmes (2) de pneumatique échangent en outre des données indiquant les états respectifs desdits pneumatiques avec ledit autre dispositif de communication (76) ; et
dans lequel, lorsque ledit dispositif de communication à distance (28) n'est pas capable de communiquer directement avec ledit système (2) de pneumatique, ledit autre dispositif de communication (76) établit lesdites voies de communications avec ledit dispositif de communication (28) par l'intermédiaire dudit réseau de télécommunications pour acheminer les données indiquant les états respectifs desdits systèmes de pneumatique jusqu'audit dispositif de communication à distance.

40. Système selon la revendication 39, dans lequel chacun desdits pneumatiques (4) intègre lesdits moyen formant capteur (20, 22, 24, 26) interconnectés électriquement, le moyen formant émetteur-récepteur (16) et le moyen formant processeur (14) et dans lequel les pneumatiques et ledit dispositif de communication à distance (28) peuvent échanger des informations.

41. Système selon la revendication 39 ou 40, dans lequel ledit dispositif de communication à distance (28) et un sélectionné parmi les systèmes (2) de pneumatique ou pneumatique sont agencés de façon à échanger des informations.

42. Système selon la revendication 41, dans lequel ledit dispositif de communication à distance (28) comprend un téléphone mobile et dans lequel les moyens formant émetteur-récepteur (16) desdits systèmes de pneumatique comprennent chacun un module de communications, ledit téléphone mobile et lesdits modules de communications respectifs fonctionnant sous un protocole de liaison de données sans fil ; et
dans lequel un sélectionné parmi lesdits systèmes (2) de pneumatique fait office de serveur et ledit téléphone mobile (28) fait office de navigateur pour échanger des données entre lesdits systèmes de pneumatique et soit ledit téléphone mobile, soit ledit autre dispositif de communication (76) dans ledit véhicule, les données mesurées par le moyen formant capteur (20, 22, 24, 26) desdits pneumatiques respectifs concernant les états desdits pneumatiques respectifs étant envoyées par ledit système de pneumatique formant serveur soit directement vers ledit téléphone mobile soit acheminées jusqu'audit téléphone mobile au moyen dudit autre dispositif de communication dans ledit véhicule.

43. Système selon l'une quelconque des revendications 39 à 41, dans lequel ledit dispositif de communication à distance (28) comprend un téléphone mobile et ledit autre dispositif de communication (76) comprend un autre téléphone mobile se trouvant dans ledit véhicule et pouvant être connecté pour communiquer avec ledit réseau de télécommunications ; et
dans lequel lesdits systèmes (2) de pneumatique desdits pneumatiques montés sur ledit véhicule échangent soit collectivement soit indépendamment des données avec ledit autre téléphone mobile (76) si ledit un téléphone mobile (28) n'est pas capable de communiquer directement avec lesdits systèmes de pneumatique de sorte que les données représentant l'état de chacun desdits pneumatiques soient acheminées vers ledit un téléphone mobile par ledit autre téléphone mobile par l'intermédiaire dudit réseau de télécommunications.

44. Système selon la revendication 39 ou 40, dans lequel le moyen formant capteur (20, 22, 24, 26) dans chacun desdits systèmes de pneumatique comprend au moins un capteur de pression (22) destiné à mesurer la pression de l'air dans chacun desdits pneumatiques et au moins un capteur de température (20) destiné à mesurer la température dans chacun desdits pneumatiques, une pression d'air corrigée en fonction de la température dans chacun desdits pneumatiques étant obtenue par compensation de la pression de l'air mesurée avec la température mesurée.

45. Procédé selon l'une quelconque des revendications 26 à 38, dans lequel ledit moyen de communications mobile (28, 76) comprend en outre un autre dispositif de communication (76), le procédé comprenant les étapes consistant à :
mettre à disposition ledit autre dispositif de communication (76) dans ledit véhicule, ledit autre dispositif de communication pouvant être adapté pour communiquer avec un réseau de télécommunications ;
établir une voie de communications entre ledit autre dispositif de communications (76) et ledit réseau de télécommunications et une autre voie de communication entre ledit dispositif de communication mobile (28) et ledit réseau de télécommunications si ledit dispositif de communication mobile ne peut pas établir une liaison directe de données avec l'un quelconque parmi lesdits systèmes (2) de pneumatique ; et
acheminer les données indiquant les états respectifs desdits pneumatiques reçues par ledit autre dispositif de communication (76) jusqu'audit dispositif de communication mobile (28) au moyen de l'une et l'autre desdits voies de télécommunications.

46. Procédé selon la revendication 45, dans lequel ledit autre dispositif de communication (76) comprend l'un parmi les dispositifs suivants : un téléphone mobile pouvant être relié à Internet, un assistant numérique personnel (PDA) pouvant être relié à Internet et un ordinateur portable intégrant une fonction de télécommunications sans fil.
